# EUROPEAN PATENT SPECIFICATION

(11) **EP 4 510 706 B1**
(45) Date of publication and mention of the grant of the patent: **05.08.2026**
(21) Application number: 22939244.4
(22) Date of filing: 29.04.2022
(51) Int. Cl.: H04W 40/04

(54) **NETWORK PATH CALCULATION METHOD AND NETWORK DEVICE**
NETZWERKPFADBERECHNUNGSVERFAHREN UND NETZWERKVORRICHTUNG
PROCÉDÉ DE CALCUL DE CHEMIN DE RÉSEAU ET DISPOSITIF DE RÉSEAU

(43) Date of publication of application: 19.02.2025
(73) Proprietor: Huawei Technologies Co., Ltd., Shenzhen, Guangdong 518129 (CN)
(72) Inventor: XU, Cong, Shenzhen, Guangdong 518129 (CN)
(74) Representative: Maiwald GmbH
(86) International application number: PCT/CN2022/090387
(87) International publication number: WO 2023/206395

(56) References cited:
- CN-A- 101 493 329
- CN-A- 101 543 114
- CN-A- 102 749 084
- CN-A- 104 573 880
- CN-A- 105 430 707
- CN-A- 110 679 120
- US-A1- 2003 021 233
- US-A1- 2007 263 544
- US-A1- 2018 367 595
- CHEMODANOV DMITRII ET AL: "A Constrained Shortest Path Scheme for Virtual Network Service Management", IEEE TRANSACTIONS ON NETWORK AND SERVICE MANAGEMENT, IEEE, USA, vol. 16, no. 1, 1 March 2019 (2019-03-01), pages 127 - 142, XP011713976, DOI: 10.1109/TNSM.2018.2865204

## Description

### TECHNICAL FIELD

This application relates to the data transmission field, and in particular, to a network path calculation method and a network device.

### BACKGROUND

With gradual transition from a consumer entertainment internet to an industrial internet, more industrial applications (such as intelligent manufacturing and remote control) are carried on a network. Different from internet services such as social entertainment and consumer shopping, industrial applications usually have stricter service level agreement (SLA) requirements. For example, a latency is required to be less than 100 milliseconds (ms), and a packet loss rate is required to be less than 10%. In addition, an SLA of the industrial internet usually has requirements on a plurality of network performance factors. For example, an intelligent manufacturing application has requirements on a network latency, reliability, and a packet loss rate. Therefore, an underlay network needs to change a conventional best effort routing mode for a single target factor, and may calculate multi-target-factor optimal paths based on SLA requirements of different applications, to provide personalized quality of service (QoS) assurance for the different applications.

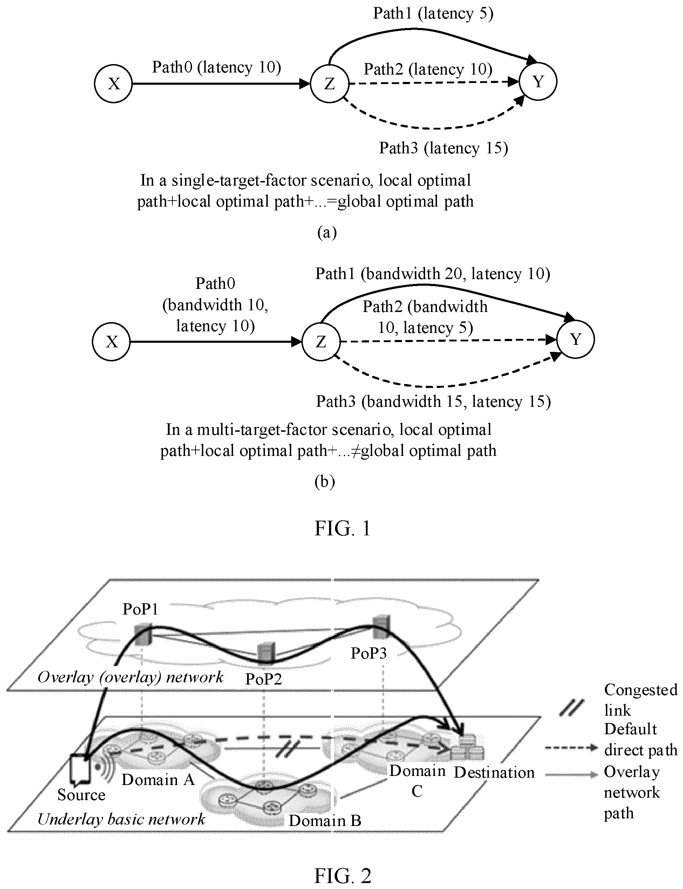

For a typical interior gateway protocol (IGP), for example, the open shortest path first (OSPF) protocol, a main idea of a method (for example, the Dijkstra algorithm as a representative) used to calculate a path is as follows: Each network node independently calculates and records an optimal path to a destination node according to a rule of "local optimal path+local optimal path+...=global optimal path". When a network node receives a data packet forwarded by a neighboring node, the network node directly forwards the data packet on a locally calculated optimal path to the destination node. Each hop of an end-to-end path uses a local optimal path, so that an end-to-end optimal path is obtained. In a network topology shown in a schematic sub-diagram (a) in FIG. 1, there is one path Path0 (where a latency is 10 and a dimension is ignored herein) from a node X to a node Z, and there are three paths from the node Z to a destination node Y, where the three paths are separately Path1 (where a latency is 5), Path2 (where a latency is 10), and Path3 (where a latency is 15). In the paths from the node Z to the node Y, Path1 is a local optimal path (because Path1 has the lowest latency). Therefore, in a typical IGP distributed algorithm, the node Z records only the local optimal path Path1. After the neighboring node X transmits a data packet of a service to the node Z, the node Z transmits the data packet to the destination node Y on the local optimal path Path1. Therefore, when two hops X→Z and Z→Y each use a local optimal path, an end-to-end optimal path X→Z→Y is obtained. The rule of "local optimal path+local optimal path+...=global optimal path" is true in a single-target-factor scenario. However, the rule of "local optimal path+local optimal path+...=global optimal path" on which the typical IGP distributed algorithm depends is not true in a multi-target-factor scenario. A schematic sub-diagram (b) in FIG. 1 shows the same network topology of X-Z-Y. It is assumed that each path has two performance indicators: a latency and a bandwidth (namely, two target factors). There is one path Path0 from the node X to the node Z (where a bandwidth is 10 and a latency is 10, and dimensions are ignored herein), and there are three paths from the node Z to the node Y, where the three paths are Path1 (where a bandwidth is 20 and a latency is 10), Path2 (where a bandwidth is 10 and a latency is 5), and Path3 (where a bandwidth is 15 and a latency is 15). It is assumed that the network carries a video service. A network performance requirement of the video service is as follows: A path with a largest bandwidth is selected first. When it is found that a plurality of paths have a same bandwidth, a path with a lowest latency is selected. In other words, the network performance requirement is a dual-target optimization requirement of "bandwidth+latency". Based on the network performance requirement of an application, an optimal path of Z→Y is Path1, because the path has the largest bandwidth. According to the typical IGP algorithm, after a data packet arrives at the node Z from the node X, the node Z transmits the data packet to the destination node Y on Path1. In this way, performance of an end-to-end path X→Z (Path1)→Y is: an end-to-end bandwidth of 10 (a smaller value of bandwidths of Path0 and Path1), and an end-to-end latency of 20 (a sum of latencies of Path0 and Path1). However, it can be found that, after the data packet is transmitted from the node X to the node Z, if the node Z does not use the local optimal path Path1 but uses a non-optimal path Path2, performance of an obtained end-to-end path X→Z(Path2)→Y is: an end-to-end bandwidth of 10 (a smaller value of bandwidths of Path0 and Path2), and an end-to-end latency of 15 (a sum of latencies of Path0 and Path2), and the performance is better than that of a case in which the node Z uses the local optimal path.

It can be learned that, in the multi-target-factor scenario, an end-to-end optimal path is not formed by combining a local optimal path of each hop, and performance of an end-to-end path obtained when a non-optimal path is used between some nodes may be usually better than that of an end-to-end path obtained when each hop uses an optimal path. Therefore, in the multi-target-factor scenario, "local optimal path+local optimal path+...+local optimal path≠global optimal path", and consequently an optimal network path in the multi-target-factor scenario cannot be calculated according to the typical IGP distributed algorithm.

The article "A Constrained Shortest Path Scheme for Virtual Network Service Management" by Dmitrii Chemodanov et al. (IEEE Transactions on Network and Service Management, vol. 16, No. 1; March 2019) describes an exact constrained shortest path algorithm for virtual network services called neighborhoods method.

### SUMMARY

The invention is set out in the appended set of claims.

A first aspect of this application provides a network path calculation method, to design, for a problem that a typical IGP distributed algorithm cannot be used to solve a multi-target-factor optimal network path, a distributed calculation method that can be used to calculate a multi-target-factor dominant network path based on any service requirement, and therefore improve capabilities of resource allocation optimization and resource control optimization.

### BRIEF DESCRIPTION OF DRAWINGS

FIG. 1 is a schematic diagram of an example of calculating an optimal network path according to a typical IGP route calculation principle according to an embodiment of this application;
FIG. 2 is an application scenario diagram of an internet overlay technology according to an embodiment of this application;
FIG. 3 is a schematic architectural diagram of a centralized algorithm according to an embodiment of this application;
FIG. 4 is a schematic principle diagram of calculating a network path by using a typical IGP distributed algorithm according to an embodiment of this application;
FIG. 5 is a schematic principle diagram of a network path calculation method according to an embodiment of this application;
FIG. 6 is a schematic diagram of impact of introducing a non-optimal path record on calculation complexity according to an embodiment of this application;
FIG. 7 is a schematic flowchart of a network path calculation method according to an embodiment of this application;
FIG. 8 is a schematic diagram of an example of determining a first reachable network path according to an embodiment of this application;
FIG. 9 is a schematic diagram of an example of determining a second reachable network path according to an embodiment of this application;
FIG. 10 is a schematic diagram of an example of a partial order comparison method according to an embodiment of this application;
FIG. 11 is a schematic diagram in which a quantity of second dominant network paths gradually increases with an iteration process in a large-scale network according to an embodiment of this application;
FIG. 12 is a schematic diagram of an example of performing iterative calculation according to an embodiment of this application;
FIG. 13 is a schematic design diagram of a multi-target-factor routing table according to an embodiment of this application;
FIG. 14 is a schematic diagram of a calculation process of performing a plurality of rounds of random selection to calculate target paths according to an embodiment of this application;
FIG. 15 is a schematic diagram of a method for resolving a data transmission disorder caused by path switching according to an embodiment of this application;
FIG. 16 is a schematic diagram of an application scenario of audio/video service routing in an RTN according to an embodiment of this application;
FIG. 17 is a schematic diagram of comparison of calculation accuracy and performance between this solution and an existing consumer cloud RTN multi-path solution in different RTN network scales according to an embodiment of this application;
FIG. 18 is a schematic diagram of comparison between calculation results of a solution of this application and an existing solution according to an embodiment of this application;
FIG. 19 is a schematic diagram of a scenario in which calculation is inaccurate in a calculation manner of Example 1 when a conditional restriction target exists according to an embodiment of this application;
FIG. 20 is a schematic diagram of a scenario of a calculation manner of Example 2 when a conditional restriction target exists according to an embodiment of this application;
FIG. 21 is a schematic diagram of a structure of a network device according to an embodiment of this application; and
FIG. 22 is a schematic diagram of another structure of a network device according to an embodiment of this application.

### DESCRIPTION OF EMBODIMENTS

A first aspect of this application provides a network path calculation method, to design, for a problem that a typical IGP distributed algorithm cannot be used to solve a multi-target-factor optimal network path, a distributed calculation method that can be used to calculate a multi-target-factor dominant network path based on any service requirement, and therefore improve capabilities of resource allocation optimization and resource control optimization.

In the specification, claims, and accompanying drawings of this application, terms such as "first" and "second" are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants thereof are intended to cover the non-exclusive inclusion, so that a process, method, system, product, or device that includes a series of units is not necessarily limited to those units, but may include other units not expressly listed or inherent to the process, method, product, or device.

Embodiments of this application relate to a lot of network-related knowledge. To better understand solutions in embodiments of this application, the following first describes related terms and concepts that may be included in embodiments of this application. It should be understood that, related concept explanation may be limited due to specific situations of embodiments of this application, but this does not mean that this application is limited to only these specific situations, and specific situations of different embodiments may differ. This is not specifically limited herein.

### (1) Underlay network

The underlay network is a network of a basic forwarding architecture of a current data center network, provided that a route between any two nodes in the data center network is reachable. The underlay network is a physical infrastructure layer. The underlay network may be improved by improving technologies of physical network devices, increasing a quantity of devices, increasing a bandwidth scale, and so on. Existing technologies of the underlay network include all existing conventional network technologies.

### (2) Overlay network

Because the internet includes a plurality of operators/internet service providers (ISPs)/autonomous domains, complex business relationships exist in interconnection between domains, and a transmission path of the internet is usually not a shortest path in the network due to impact of the business relationships. For example, transmission between two Asian nodes may be routed to Europe, increasing an end-to-end latency. In addition, because routing of the internet is unaware of path performance, it is difficult to avoid a failure or congestion in the path, or long convergence time is required.

To resolve a problem of a non-optimal internet path, an internet overlay technology is provided in the industry. In the network technology field, the overlay technology is a virtualization technology mode overlaid on a network architecture. A general framework of the overlay technology is to carry applications on a basic network without large-scale modification of the network, separate the applications from other network services, and mainly use an IP-based basic network technology. The overlay technology is to construct a virtual network above an existing physical network. Upper-layer applications are related only to the virtual network.

Specifically, forwarding units (which may also be referred to as network nodes) are placed in data centers of different areas on the internet, and are connected to each other for mutual scheduling. A new layer of virtual overlay network (namely, an overlay network) is constructed based on the existing public internet (namely, an underlay network). The intermediately deployed network node may be referred to as a forwarding relay (which may be denoted as a PoP). For ease of understanding, refer to FIG. 2. FIG. 2 is a diagram of an application scenario of the internet overlay technology. In FIG. 2, a default link between a source device and a destination device is a network path shown by a dashed line. It is assumed that a cross-domain link between a domain A and a domain B is currently severely congested. In this case, still performing routing on the default link causes end-to-end performance deterioration. However, by using the overlay technology, PoPs are separately deployed in the domain A, the domain B, and a domain C. A PoP deployed in the domain A is referred to as PoP1, a PoP deployed in the domain B is referred to as PoP2, and a PoP deployed in the domain C is referred to as PoP3. A route from PoP1 to PoP3 that is controlled by an overlay backbone network is PoP1→PoP2→PoP3. In this way, the congested link between the domain A and the domain B is effectively bypassed, and overall end-to-end performance is improved.

### (3) Real-time network (RTN)

The real-time network is a specific network form of an overlay network, and is a real-time audio/video transmission network with a brand-new architecture. The real-time network is similar to a content delivery network (CDN) for live broadcasting, and is designed for scenarios that have strong requirements on audio/video real-time performance. In principle, a global end-to-end latency may be controlled within 300 ms through the real-time network. In embodiments of this application, a network node included in the real-time network may also be referred to as an RTNnode.

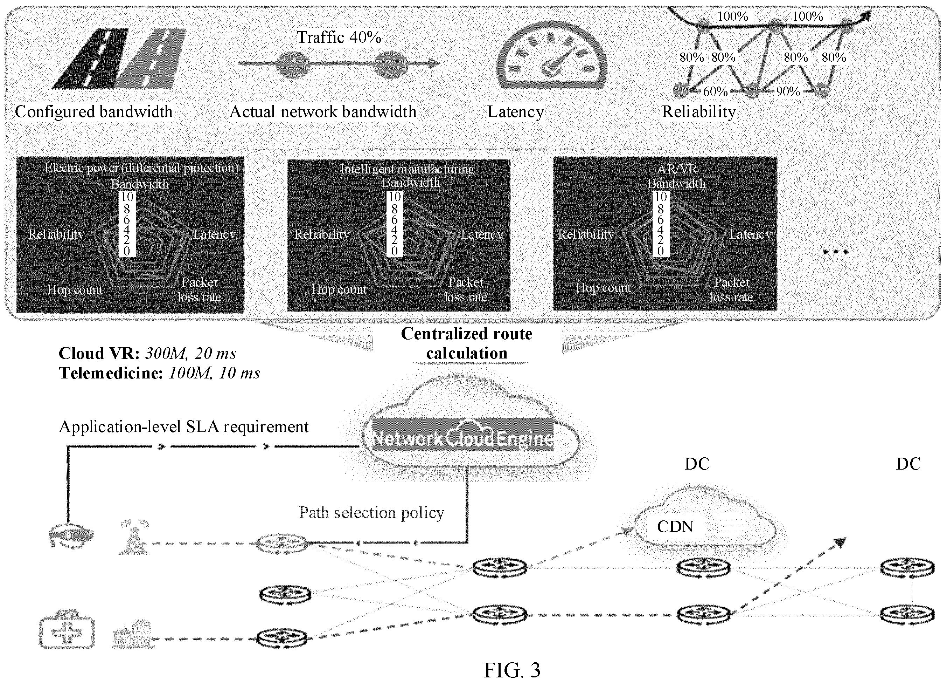

Because the typical IGP distributed algorithm cannot be used to calculate a multi-target-factor optimal path, a centralized algorithm is mainly used in the industry when there is a multi-target-factor network path calculation requirement. To be specific, a centralized architecture is used to aggregate full path information and network performance requirements of different network applications to a centralized network controller (which may be referred to as a centralized controller), and the centralized controller calculates optimal paths for the network performance requirements of the different applications based on the full path information. A typical architecture of centralized multi-target-factor network path calculation is shown in FIG. 3. After calculating an end-to-end optimal path, the centralized controller delivers the path to each network node along the path, to complete data forwarding.

The centralized algorithm records the full path information, while the typical IGP distributed algorithm records only a local optimal path. Therefore, the centralized algorithm has larger traversal space, and can accurately find the optimal paths that meet the network performance requirements of the applications from full paths. In this way, a problem of inaccurate calculation of the typical IGP distributed algorithm in a multi-target-factor scenario does not occur. However, the centralized algorithm has a problem of poor real-time performance and scalability, and usually has extremely high calculation overheads. As a network scale expands, time complexity for accurately solving an optimal path that meets an SLA requirement of an application is unacceptable. According to related test data, in a network scale of 2K nodes and 10K links, a time period for centrally completing calculation of an optimal path for a plurality of centralized target factors based on an SLA requirement of a specific application is about one day, and a real-time requirement of a service is at a subsecond level. Consequently, the centralized algorithm is not applicable to large-scale network environments or real-time network services due to limitations of real-time performance and scalability.

In addition to the centralized algorithm, some distributed approximate optimal path algorithms are used in the industry, including an IGP distributed path algorithm based on multi-target-factor weighted normalization, an approximate optimal path algorithm based on single-target-factor KSP, an optimal path algorithm based on a plurality of single target factors of network slicing, and the like. For example, the IGP distributed path algorithm based on multi-target-factor weighted normalization is to normalize a plurality of target factors into one comprehensive parameter in a weighted manner, and perform IGP single-factor optimal path calculation based on the comprehensive parameter. In this weighted normalization method, setting of weights of different target factors finally affects a calculation result. Therefore, such a method focuses on how to design weight distribution of different target factors to enable a calculation result to meet a constraint. Although the weighted normalization method can comprehensively consider impact of each target factor on application performance, in other words, the weighted manner can be used to amplify a dominant capability of a key target factor in path calculation, accurate parameter matching cannot be performed according to application logic (for example, a path with a latency<300 ms, a bandwidth>500 Mbps, and a jitter<50 ms cannot be accurately calculated, and only a weight of the latency, the bandwidth, or the jitter can be amplified as much as possible to approximately meet a network performance requirement of an application), and only coarse-granularity weighting can be performed based on importance of each target factor corresponding to a network performance requirement of an application, but a precise SLA requirement of the network application cannot be met. To resolve this problem, a new distributed method is provided to first calculate top K optimal paths based on a single factor to form a candidate solution set, and then screen out an optimal path from the candidate solution set based on a network performance requirement of an application, where the optimal path is approximately equivalent to a global optimal path (that is, the approximate optimal path algorithm based on single-target-factor KSP). Although accurate optimal path calculation based on the network performance requirement of the application can be implemented in space of top K single-target-factor solutions calculated by using the KSP algorithm, a path with multi-target-factor optimal performance may not exist in the space of the top K single-target-factor solutions (for example, a latency is used as a target factor, and top 10 paths with lowest latencies are calculated based on the KSP algorithm, but the top 10 paths with the lowest latencies may have other poor target factors such as packet loss rates, bandwidths, or costs, and in this case, a path with global optimal performance is missed in solution space of the top 10 paths with the lowest latencies). The optimal path algorithm based on a plurality of single target factors of network slicing is to calculate single-target-factor routes based on different target factors in different network slices with reference to a logical network slicing method of physical links. A representative solution of such a method is the Flex-Algo solution jointly promoted by Cisco and Juniper. The Flex-Algo solution still uses a standard IGP algorithm, and a difference lies in that this solution allows switching between different target factors in networks with a same topology. For example, in a same network topology, when a latency is used as a target factor and a bandwidth is used as a target factor, different end-to-end optimal routes may be obtained based on different link performance. With reference to a logical slicing method of a physical network, different end-to-end optimal routes may be calculated for different applications in different network slices separately based on a bandwidth factor and a latency factor, to provide differentiated quality of service. However, according to previous analysis, each application usually has performance requirements for a plurality of target factors (for example, has requirements on a plurality of indicators such as a latency, a bandwidth, and a jitter). Therefore, path calculation needs to be performed based on the plurality of target factors in each network slice. The Flex-Algo solution cannot implement this function.

In conclusion, a main problem of the existing distributed approximate optimal path algorithm is that a multi-target optimal path that meets a service requirement of an application cannot be accurately calculated. A reason for this problem is that the existing distributed approximate optimal path algorithm does not fundamentally change the IGP algorithm. Therefore, if an additional target factor is introduced when the algorithm is not changed, usually, only an approximate optimal path can be calculated, and a calculation result is inaccurate. As a result, a global optimal path cannot be obtained in the multi-target-factor scenario in which "local optimal path+local optimal path+...+local optimal path≠global optimal path".

Therefore, in this application, to resolve the foregoing problem, the conventional IGP distributed algorithm is improved, and a local dominant network path is additionally recorded, so that an end-to-end optimal path that meets a multi-target-factor network performance requirement of an application can be accurately calculated by using minimum calculation overheads in the multi-target-factor scenario in which "local optimal path+local optimal path+...+local optimal path≠global optimal path". This breaks through limitations of all existing solutions and improves the capabilities of resource allocation optimization and resource control optimization.

The following describes embodiments of this application with reference to the accompanying drawings. A person of ordinary skill in the art may know that, with development of technologies and emergence of new scenarios, the technical solutions provided in embodiments of this application are also applicable to similar technical problems.

First, a core principle of the network path calculation method provided in embodiments of this application is described. A dual-target-factor scenario of a video service is used as an example. It is assumed that a network performance requirement of the video service is as follows: A path with a largest bandwidth is selected first. When it is found that a plurality of paths have a same bandwidth, a path with a lowest latency is selected. This is a dual-target optimization scenario of "bandwidth+latency". In this application, a performance array including two elements may be used to identify a bandwidth and a latency of each hop of link. For example, (20, 10) indicates that a bandwidth of a link is 20 and a latency of the link is 10 (where dimensions are ignored herein).

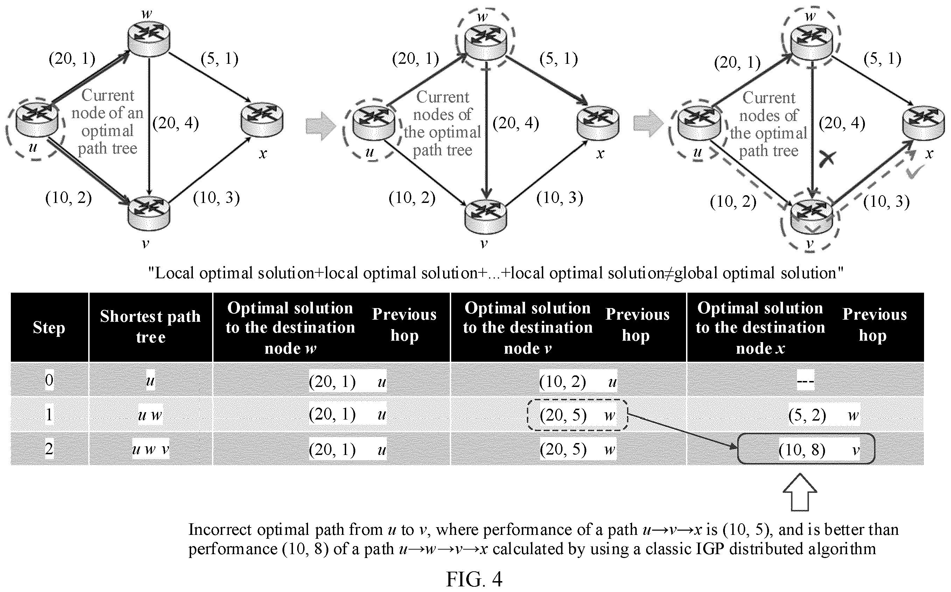

As shown in FIG. 4, in the conventional IGP distributed algorithm, a source node (assumed as a node u in FIG. 4 herein) adds a reachable node in FIG. 4 to an optimal path tree for each iteration, and updates a current optimal path and path performance from the source node to all other destination nodes (w, v, and x) in the current optimal path tree. For example, in a third iteration, the node w and the node v join a shortest path tree. In this case, an optimal path, recorded in a routing entry, from the node u to the node w is u→w, and performance of the optimal path is (20, 1), in other words, a bandwidth is 20 and a latency is 1. An optimal path, recorded in the routing entry, from the node u to the node v is u→w→v, and performance of the optimal path is (20, 5). It should be noted herein that there is another path u→v from the node u to the node v. and performance of the path is (10, 2). However, according to a network performance requirement of an application, a path with a largest bandwidth is preferentially selected. Therefore, the typical IGP distributed algorithm considers that the performance (20, 5) of the path u→w→v is better than the performance (10, 2) of the path u→v, because a primary performance indicator "bandwidth" of the path u→w→v is larger. However, the typical IGP distributed algorithm only records an optimal path to each destination node. Therefore, in the routing entry, for paths from the node u to the node v, only the path u→w→v with the performance (20, 5) is recorded, and the path u→v with the performance (10, 2) is not recorded. When an optimal path from the node u to the node x is further calculated, the node u finds that the node x may be reached through relaying of the node w or the node v. The typical IGP distributed algorithm compares performance of end-to-end paths from the node u to the node x in two cases, and records a path with optimal performance. A specific process is as follows:

(1) If the node w is used for relaying, the performance of the optimal path u→w from the node u to the node w is (20, 1), and performance of a direct path from the node w to the node x is (5, 1), so that performance of an obtained end-to-end path u→w→x is (20, 1)+(5, 1)=(5, 2). In other words, a bandwidth takes a smaller value of the two hops, that is, min(20, 5)=5, and a latency takes a sum of values of the two hops, that is, add(1, 1)=2.

(2) If the node v is used for relaying, the performance of the optimal path u→w→v from the node u to the node v is (20, 5), and performance of a direct path from the node v to the node x is (10, 3), so that performance of an obtained end-to-end path u→w→v→x is (20, 5)+(10, 3)=(10, 8).

In this case, the source node u comprehensively compares the performance of the end-to-end paths in the two cases, and finds that the performance (10, 8) of the path using the node v for relaying is better than the performance (5, 2) of the end-to-end path using the node w for relaying, because a first optimization target "bandwidth" is larger. Therefore, in the typical IGP distributed algorithm, a finally calculated optimal path from the source node u to the destination node x is u→w→v→x, and the performance of the optimal path is (10, 8).

However, it can be found that, when the node v is used for relaying, for an end-to-end path from the node u to the node v, if the local optimal path u→w→v is not used, but the local non-optimal path u→v is used, and then the direct path from the node v to the node x is used, performance of an obtained end-to-end path u→v→x is (10, 2)+(10, 3)=(10, 5), and is better than the performance (10, 8) of the IGP optimal path u→w→v→x obtained when each hop uses an optimal path in the typical IGP distributed algorithm. This is because a bandwidth of the path u→v→x is the same as that of the end-to-end path u→w→v→x calculated by using the typical IGP distributed algorithm, but a latency is lower. However, in an iterative calculation process of the typical IGP distributed algorithm, when the optimal path to the destination node v is calculated, because the performance (20, 5) of the path u→w→v is better than the performance (10, 2) of the path u→v (because the bandwidth of the path u→w→v is larger), the local non-optimal path u→v is not recorded in the typical IGP routing entry, and therefore the end-to-end optimal path u→v→x cannot be calculated based on the local non-optimal path u→v.

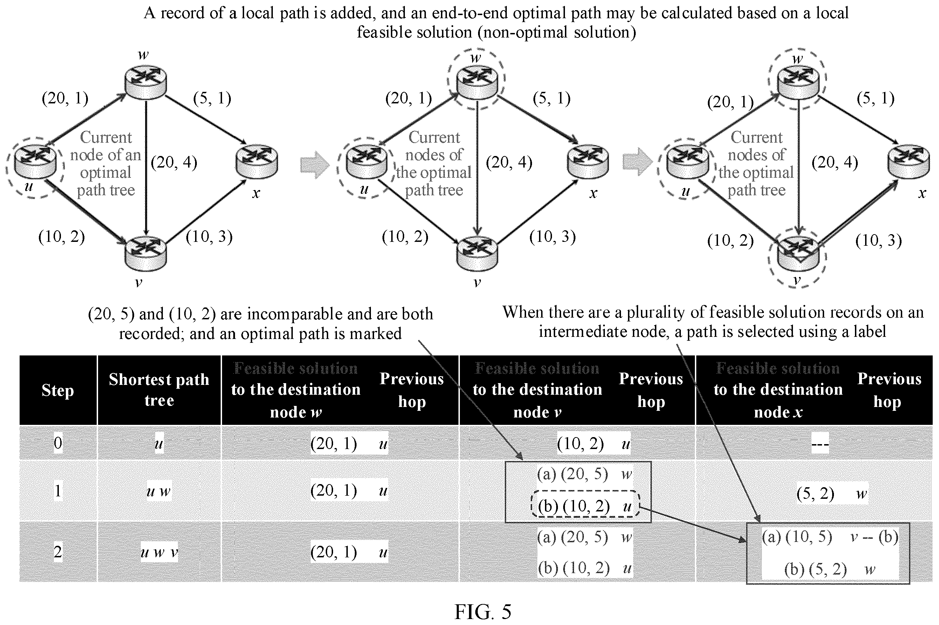

To resolve this problem, in embodiments of this application, a record of a local non-optimal path is introduced based on the typical IGP distributed algorithm. As shown in FIG. 5, in this embodiment of this application, after a node w is added to an optimal path tree in a second iteration, two paths to a node v may be calculated, where the paths are separately a path u→w→v and a path u→v, performance of the path u→w→v is (20, 5), and performance of the path u→v is (10, 2). However, different from the typical IGP distributed algorithm, in this embodiment of this application, although the performance of the path u→v is inferior to the performance of the path u→w→v based on a network performance requirement of a service, and the path u→v is not an optimal path, the path is also recorded in this embodiment of this application. In this way, when an optimal path to a node x is calculated in a next iteration, in this embodiment of this application, a real end-to-end optimal path u→v→x may be calculated based on the local non-optimal path u→v.

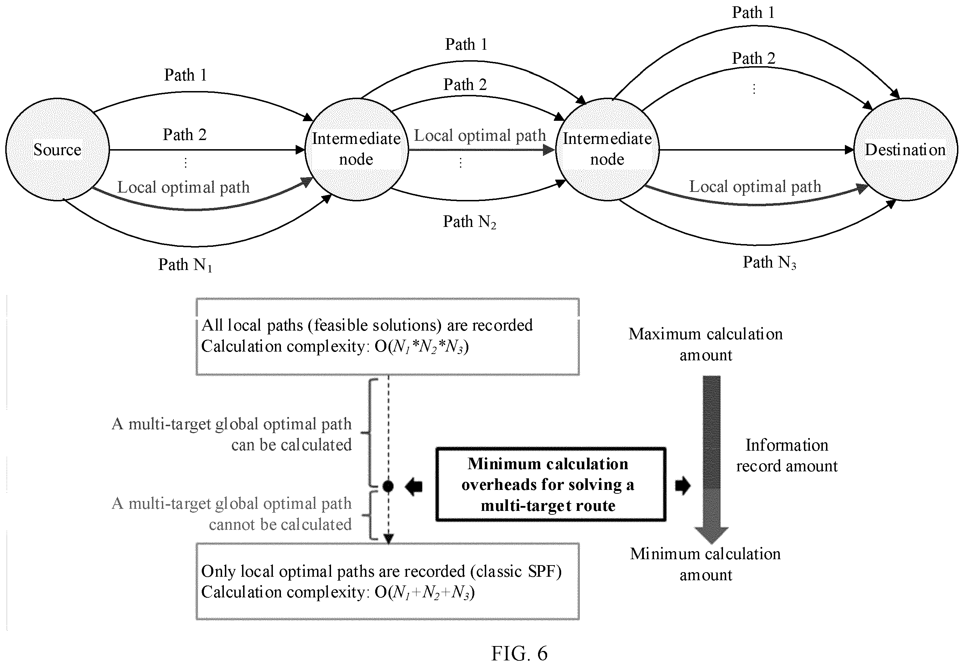

After the record of the non-optimal path is introduced, a problem of accuracy of an optimal path in the multi-target-factor scenario is resolved, but a new problem of reduced path calculation efficiency may be caused, in other words, after the record of the non-optimal path is introduced, more paths need to be traversed and compared in iterative calculation. As shown in FIG. 6, it is assumed that in a three-hop network topology, there are N1 paths from a source node to an intermediate node 1, there are N2 paths from the intermediate node 1 to an intermediate node 2, and there are N3 paths from the intermediate node 2 to a destination node. If the typical IGP distributed algorithm is used, only a local optimal path is calculated and recorded for each hop, and hop-by-hop optimal paths are combined into an end-to-end optimal path. In this case, calculation complexity is O(N1+N2+N3) and calculation overheads are minimized, but an optimal path calculation error may occur. As more non-optimal paths are introduced, a path calculation result becomes more accurate. An extreme situation is as follows: When information about all non-optimal paths (namely, full paths) is recorded, complexity of calculating a global optimal path increases to O(N1*N2*N3). In this case, an end-to-end optimal path in the multi-target-factor scenario can be accurately obtained through traversal, but calculation overheads may be high. Based on this, another objective of embodiments of this application is to find minimum calculation overheads that can ensure path calculation accuracy in the multi-target-factor scenario, in other words, record a minimum quantity of local non-optimal paths on while ensuring the accuracy in the multi-target-factor scenario.

To implement calculation complexity optimization, a partial order comparison method based on performance arrays is designed in embodiments of this application, so that a local non-optimal path that does not need to be recorded can be filtered out in real time in an iterative calculation process, and calculation overheads can be minimized through real-time pruning.

After the principle of the network path calculation method in embodiments of this application is described, the following describes a specific process of the network path calculation method provided in embodiments of this application. It should be noted that, in an actual network system (namely, a target network), each network node may independently perform the network path calculation method described in embodiments of this application to calculate a multi-target-factor dominant network path that uses the local network node as a source node and that reaches a final destination node, and form a local routing table based on the obtained dominant network path. In this case, the following step 701 to step 707 are performed by the source node.

However, it should be noted that, in some other implementations of this application, if there is a network node (which may also be referred to as a control node, a management node, or the like) for unified performance testing in the network system, alternatively, the control node may perform the network path calculation method described in embodiments of this application to calculate a multi-target-factor dominant network path that uses a specific network node as a source node and that reaches a final destination node, and then deliver the calculated dominant network path to another network node in the network system to form a local routing table. In this case, the following step 701 to subsequent step 707 are performed by the control node.

Therefore, in embodiments of this application, the network path calculation method provided in embodiments of this application may be performed by the current source node, or may be performed by the control node for unified management in the target network. For different execution entities for executing this method, specific operation situations of the different entities for executing this method in each step are separately described.

Specifically, if an entity for executing this method is the source node, the source node and another network node in the target network may obtain a network topology and link performance information (for example, a latency, a bandwidth, and a packet loss rate) through notification of IGP information with each other. When an application on a target device that accesses the source node needs to transmit data (namely, to-be-sent data), the application on the target device formalizes an application requirement (for example, a network performance requirement) of the application in a data packet, and then transfers the data packet to the source node. After receiving and parsing the data packet, the source node performs network path calculation based on the application requirement, the network topology, and the link performance information. If an entity for executing this method is the control node, the control node notifies the another network node in the target network of a network topology and link performance information. When an application on a target device that accesses the source node needs to transmit data, the application on the target device formalizes an application requirement of the application in a data packet, and then transfers the data packet to the control node. After receiving and parsing the data packet, the control node performs network path calculation based on the application requirement, the network topology, and the link performance information, and then notifies the another network node in the target network of a target path obtained through calculation.

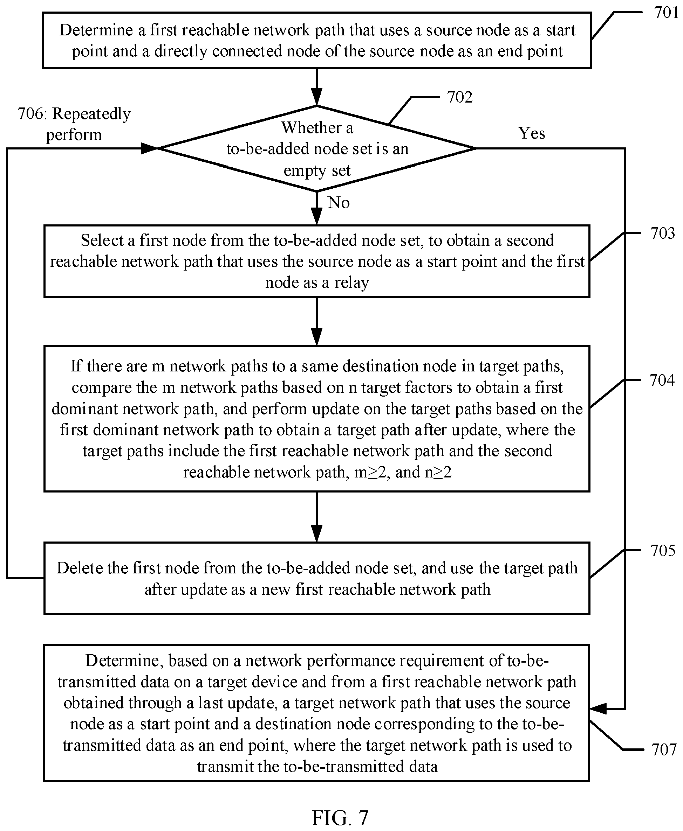

For details, refer to FIG. 7. FIG. 7 is a schematic flowchart of a network path calculation method according to an embodiment of this application. The method may specifically include the following steps.

701: Determine a first reachable network path that uses a source node as a start point and a directly connected node of the source node as an end point.

First, a reachable network path that uses the source node as a start point and the directly connected node of the source node as an end point is determined, where the reachable network path may be referred to as the first reachable network path (where there may be one or more first reachable network paths). The directly connected node is a node that is directly connected to the source node without using another node as a relay in the middle. It should be noted that the reachable network path not only includes network nodes involved in the reachable network path, but also includes overall network performance (for example, a latency, a bandwidth, and a packet loss rate of the reachable network path) of the entire reachable network path. The source node is a network node accessed by a target device (namely, a device having to-be-sent data) in a network (which may be referred to as a target network). The network node may be a router, a server in the target network, or the like, and is specifically determined based on a type of the involved target network. This is not limited in this application. For example, it is assumed that the target network is an overlay network, and a device 1 (for example, a mobile phone or a host) accesses a nearest network node A in the overlay network. In this case, for the device 1, the network node A is the source node. Similarly, if another device 2 accesses a nearest network node B in the overlay network, for the device 2, the network node B is the source node. In other words, each network node in the target network may be a source node corresponding to a specific target device, and the source node is specific to a specific device having to-be-sent data. In this embodiment of this application, for ease of description, only an example of a specific target device and a network node accessed by the target device that is used as the source node is used for description.

It should be noted that, in some implementations of this application, the target network may be an overlay network, and a typical overlay network scenario is, for example, a real-time network RTN that carries an audio/video service. The RTN comprehensively calculates, based on different requirements of the audio or video service on network performance factors such as a latency, a packet loss rate, and a jitter, an end-to-end optimal overlay network path that meets an audio/video transmission requirement. In addition, the target network may alternatively be an underlay network, and a typical underlay network scenario is, for example, a campus network or cloud network service data transmission scenario. In the campus network scenario, an optimal data forwarding path of a router needs to be planned based on requirements of different office applications on different network performance parameters (for example, a video conference service requires a low jitter and a low packet loss rate, and a desktop cloud service requires a large bandwidth and a low latency). In the cloud network scenario, a cloud service provider may provide paths with different performance quality for different cloud users based on VIP levels of the users. For example, for a gold path, a latency<10 ms and a packet loss rate<5%; for a silver path, a latency<15 ms and a packet loss rate<5%; and for a bronze path, a latency<20 ms and a packet loss rate<10%. Specifically, a specific type of the target network is not limited in this application.

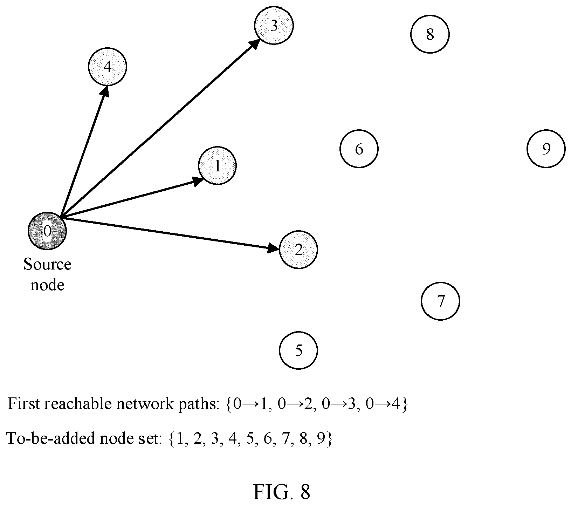

For ease of understanding step 701, the following uses an example for illustration. For details, refer to FIG. 8. It is assumed that a network topology determined in the target network includes 10 network nodes in total, where the network nodes are separately nodes 0 to 9; the source node is the node 0, and other network nodes are nodes 1 to 9; and it can be learned based on the network topology that there are four adjacent nodes (namely, directly connected nodes) that the node 0 can reach, where the four adjacent nodes are separately the node 1, a node 2, a node 3, and a node 4. In this case, there are a total of four first reachable network paths that each use the source node as a start point and a directly connected node of the source node as an end point, where the paths are separately node 0→node 1, node 0→node 2, node 0→node 3, and node 0→node 4. For ease of description, the four first reachable network paths may be denoted as {0→1, 0→2, 0→3, 0→4}.

Step 701 may be performed by the source node or a control node. Specific execution processes of step 701 are slightly different due to different execution bodies, and are separately described below.

### (1) An entity for executing this method is the source node.

When the entity for executing this method is the source node, a specific implementation of determining the first reachable network path that uses the source node as the start point and the directly connected node of the source node as the end point may be as follows: The source node and another network node in the target network may obtain a network topology and link performance information (for example, a latency, a bandwidth, a packet loss rate, and a jitter) through notification of IGP information with each other. Then, the source node determines, based on the network topology and the link performance information, the first reachable network path that uses the source node as the start point and the directly connected node of the source node as the end point.

### (2) An entity for executing this method is the control node.

When the entity for executing this method is the control node, a specific implementation of determining the first reachable network path that uses the source node as the start point and the directly connected node of the source node as the end point may be as follows: The control node obtains a network topology and link performance information. For example, the control node may collect performance measurement data of the target network at an interval of a specific time period (for example, one minute), and determine a connection status between every two network nodes in the target network based on the collected performance measurement data, to obtain the overall network topology through integration. In addition, the control node may further obtain the link performance information based on the collected performance measurement data. Then, the control node determines, based on the network topology and the link performance information, the first reachable network path that uses the source node as the start point and the directly connected node of the source node as the end point.

It should be noted that there may be a plurality of implementations of determining the network topology of the target network. In an example, when network performance such as a latency, a bandwidth, a jitter, or a packet loss rate between two network nodes reaches or does not reach a preset threshold, it may be considered that the two network nodes are not connected. For example, when a packet loss rate between two network nodes reaches a preset threshold (for example, 80%), it is considered that the two network nodes are not connected. In another example, whether two network nodes in the target network are connected may alternatively be customized. For example, when a maintenance engineer needs to disconnect a network node A from a network node B based on another restriction requirement, the maintenance engineer may customize that the network node A and the network node B are not connected.

702: Determine whether a to-be-added node set is an empty set. If the to-be-added node set is not an empty set, step 703 is performed. If the to-be-added node set is an empty set, step 707 is performed.

Then, it is determined whether the to-be-added node set is an empty set, where the to-be-added node set is a set of network nodes other than the source node in the target network. If it is determined that the to-be-added node set is not an empty set (in other words, there is a network node in the to-be-added node set), step 703 is performed. If it is determined that the to-be-added node set is an empty set (in other words, there is no network node in the to-be-added node set), step 707 is performed.

For ease of understanding step 702, FIG. 8 is still used as an example for illustration below. It is assumed that the network topology determined in the target network includes 10 network nodes in total, where the network nodes are separately the nodes 0 to 9; and the source node is the node 0. In this case, the to-be-added node set includes the nodes 1 to 9. For ease of description, the to-be-added node set may be denoted as {1, 2, 3, 4, 5, 6, 7, 8, 9}. When step 702 is performed, it may be determined that the to-be-added node set is not an empty set (because there are still nine network nodes in total, namely, the nodes 1 to 9). In this case, go to step 703 to perform subsequent steps 703 to 706. It should be noted that step 706 is a repeated execution process, and is repeatedly performed until the to-be-added node set is empty. If the to-be-added node set is empty, step 707 is performed.

It should be noted herein that, regardless of whether the entity for executing this method is the source node or the control node, processes of performing step 702 by the entity for executing this method are similar, and therefore are not separately described herein.

703: Select a first node from the to-be-added node set, to obtain a second reachable network path that uses the source node as a start point and the first node as a relay.

When it is determined that the to-be-added node set is not empty, a node (which may be referred to as the first node) is selected from the to-be-added node set to obtain a reachable network path that uses the source node as a start point and the first node as a relay. The reachable network path may be referred to as the second reachable network path.

It should be noted that, in some implementations of this application, an intermediate node of the second reachable network path does not include a network node other than the first node in the to-be-added set. In addition, the intermediate node of the second reachable network path does not include a first network node (namely, the source node) and a last destination node (namely, a destination node) of the second reachable network path, but is any "intermediate" network node. For example, it is assumed that the second reachable network path is A→B→C→...→X, where A, B, C, ..., and X are all network nodes. In this case, an intermediate node of the second reachable network path is any network node in B, C, ..., and does not include the source node A and the destination node X.

It should be further noted that, in some other implementations of this application, a manner of selecting a network node from the to-be-added node set as the first node may be random selection, or may be selecting, from the to-be-added node set based on a network performance requirement of to-be-transmitted data on the target device, a network node that meets a preset performance requirement as the first node.

To facilitate understanding of the process of selecting the first node, the following still uses FIG. 8 as an example for description. It is assumed that the network performance requirement of the to-be-transmitted data is as follows: A path with a lowest latency is preferentially selected; and when a plurality of paths have the same lowest latency, a path with a lowest packet loss rate is preferentially selected (that is, two target factors "latency+packet loss rate" are considered). In some implementations of this application, a network node may be randomly selected from the to-be-added node set {1, 2, 3, 4, 5, 6, 7, 8, 9} as the first node. An advantage of this selection manner is that no additional factor needs to be considered. In some other implementations of this application, a network node whose expected local path (where it is assumed that all the other network nodes in the target network are connected to the source node, and therefore a path is referred to as an "expected local path" instead of a real local path) from the node 0 has a lowest latency may alternatively be selected, as the first node, from the to-be-added node set {1, 2, 3, 4, 5, 6, 7, 8, 9} based on the network performance requirement of the to-be-transmitted data (to be specific, a path with a lowest latency is preferentially selected; and when a plurality of paths have the same lowest latency, a path with a lowest packet loss rate is preferentially selected). It is assumed that the network node whose expected local path has the lowest latency is the node 3. In this case, the selected first node is the node 3. An advantage of this selection manner is that a dominant network node may be selected in advance, to reduce a quantity of subsequently obtained dominant network paths and a quantity of comparison times, and therefore improve iteration efficiency.

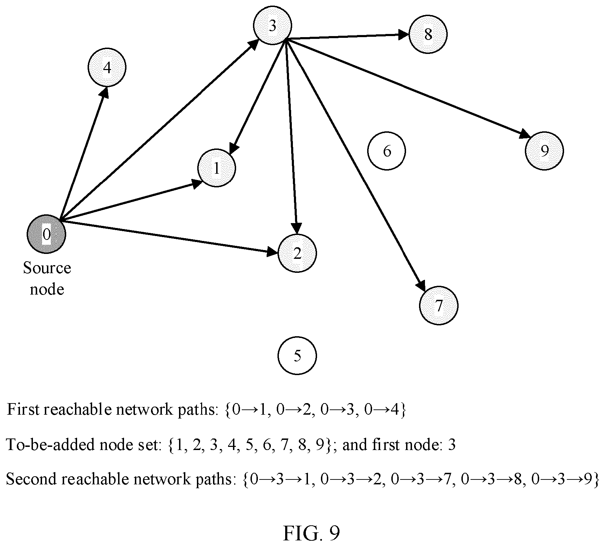

For ease of understanding step 703, the following uses FIG. 9 as an example for illustration. It is assumed that a network topology determined in the target network includes 10 network nodes in total, where the network nodes are separately nodes 1 to 9; and the source node is the node 0. In this case, the to-be-added node set includes nodes 1 to 9. For ease of description, the to-be-added node set may be denoted as {1, 2, 3, 4, 5, 6, 7, 8, 9}. It is also assumed that the first node selected from the to-be-added node set is the node 3. In this case, in the existing network topology, a second reachable network path that uses the node 0 as a start point and the node 3 as a relay is found, where an intermediate node of the second reachable network path cannot include nodes {1, 2, 4, 5, 6, 7, 8, 9}. It can be learned from FIG. 9 that, it is assumed that there are a total of five second reachable network paths that each use the node 0 as a start point and the node 3 as a relay, and the five second reachable network paths are separately {0→3→1, 0→3→2, 0→3→7, 0→3→8, 0→3→9}.

It should be noted herein that, regardless of whether the entity for executing this method is the source node or the control node, processes of performing step 703 by the entity for executing this method are similar, and therefore are not separately described herein.

704: If there are m network paths to a same destination node in target paths, the m network paths are compared based on n target factors to obtain a first dominant network path, and the target path is updated based on the first dominant network path to obtain an updated target path, where the target paths include the first reachable network path and the second reachable network path, m≥2, and n≥2.

In this embodiment of this application, all reachable network paths included in the first reachable network path and the second reachable network path may be referred to as target paths (where there are one or more target paths). For example, as shown in FIG. 9, there are a total of four first reachable network paths, where the paths are separately {0→1, 0-2, 0→3, 0→4}; and there are a total of five second reachable network paths, where the paths are separately {0→3→1, 0→3→2, 0→3→7, 0→3→8, 0→3→9}. In this case, there are 4+5=9 obtained target paths, and the paths are separately {0→1, 0→3→1, 0→2, 0→3→2, 0→3, 0→4, 0→3→7, 0→3→8, 0→3→9}.

Then, it is determined whether there are m (m≥2) network paths to a same destination node in the target paths. If there are m network paths to a same destination node, the m network paths are compared based on the n (n≥2) preset target factors to obtain a dominant network path (where there are one or more dominant network paths), where the dominant network path may be referred to as the first dominant network path. In addition, the target path is updated based on the first dominant network path to obtain the updated target path.

It should be noted that, in some implementations of this application, the target factor may be a network performance indicator, for example, a bandwidth, a latency, a packet loss rate, a jitter, or costs. It should be noted herein that, in the industry, regardless of whether a centralized algorithm or a distributed approximate optimal path algorithm (for example, the IGP distributed path algorithm based on multi-target-factor weighted normalization, the approximate optimal path algorithm based on single-target-factor KSP, or the optimal path algorithm based on a plurality of single target factors of network slicing described above) is used, calculation logic is presented in a single dimension of "finding an optimal solution", for example, finding a path with an optimal latency or a path with an optimal packet loss rate. However, in an actual application scenario, not all indicators are required to be optimal. Sometimes, some indicators usually only need to be optimized to be within specific thresholds, for example, the latency<300 ms, the bandwidth>500 Mbps, and a hop count does not exceed 4. In this embodiment of this application, such a target factor for which an optimal solution is not required is referred to as a conditional restriction target. Therefore, in some implementations of this application, the target factor may alternatively be a conditional restriction target, for example, the latency<300 ms, the bandwidth>500 Mbps, or a total hop count of a network path does not exceed a preset hop count. Specifically, a specific type of the target factor is not limited in this application, and may be autonomously set based on a specific application scenario and requirement. In this embodiment of this application, when a network performance requirement of an application includes both a network performance indicator and a conditional restriction target, before the conditional restriction target reaches a threshold, the conditional restriction target is converted into a specific indicator value to participate in calculation of a first dominant path; and after the conditional restriction target reaches the threshold, the conditional restriction target no longer participate in the calculation of the first dominant path (in other words, a corresponding network path is directly removed).

For case of understanding step 704, FIG. 9 is still used as an example for illustration below. It can be learned from the foregoing descriptions that there are nine obtained target paths, and the paths are separately {0→1, 0→3→1, 0→2, 0→3→2, 0→3, 0→4, 0→3→7, 0→3→8, 0→3→9}. In the nine target paths, there are a total of two groups of paths that each include at least two network paths that use the node 0 as source nodes and that reach a same destination node. One group is two network paths to the same destination node 1: {0-1, 0→3→1}, and the other group is two network paths to the same destination node 2: {0→2, 0-3-2}. A first group of network paths {0→1, 0→3→1} is used as an example. The two network paths {0→1, 0→3→1} are compared based on the n (n≥2) preset target factors to obtain one or more first dominant network paths corresponding to the first group of network paths, where a quantity of first dominant network paths is less than or equal to a quantity of paths in the first group of network paths. Similarly, for a second group of network paths {0→2, 0→3→2}, the two network paths {0→2, 0→3→2} are also compared based on the n preset target factors to obtain one or more first dominant network paths corresponding to the second group of network paths, where a quantity of first dominant network paths is less than or equal to a quantity of paths in the second group of network paths. Finally, the target paths are updated based on the obtained first dominant network path corresponding to each group to obtain updated target paths.

It should be noted that, in some implementations of this application, an implementation of updating the target paths based on the obtained first dominant network path may be as follows: When there are the m network paths to the same destination node, only the first dominant network path is reserved in the target paths. In other words, a non-dominant network path determined through comparison is removed from the target paths, and does not participate in a subsequent iteration process. The non-dominant network path that does not need to be recorded is filtered out in real time (that is, real-time pruning) to minimize calculation overheads.

For ease of understanding the real-time pruning process, the foregoing example is still used for description. It is assumed that a first dominant network path finally obtained after the first group of network paths are compared is {0→1}, and a first dominant network path finally obtained after the second group of network paths are compared is {0→3→2}. In this case, paths {0→3→1, 0→2} are deleted from the nine target paths, and there are seven updated target paths: {0→1, 0→3→2, 0→3, 0→4, 0→3→7, 0→3→8, 0→3→9}.

It should be noted that, in some implementations of this application, if there are m network paths to a same destination node in the target paths, a specific implementation of comparing the m network paths based on the n target factors (where a specific network performance requirement of an application is ignored herein) to obtain the first dominant network path may be as follows: Partial order comparison is performed on the m network paths based on the n target factors, and a network path that is determined as being more dominant or a network path that cannot be determined as being dominant or not dominant after the partial order comparison is used as a dominant network path. In this case, the obtained dominant network path may be referred to as a second dominant network path. The following describes a specific implementation of performing partial order comparison.

First, m performance arrays of the m network paths are constructed based on the n target factors, where each performance array includes n elements arranged in order, one network path corresponds to one performance array, and one element corresponds to a specific value of one target factor on a corresponding network path. For example, it is assumed that the n preset target factors are separately metric-1, metric-2, ..., and metric-n (where "metric" may be any indicator, for example, a network performance indicator such as a bandwidth, a latency, or a packet loss rate, or may be any conditional restriction target, for example, a total hop count of a path not exceeding 5), and there are a total of two (that is, m=2) network paths to a same destination node, where the two paths are separately a path A and a path B. In this case, two performance arrays are constructed, where the performance arrays are separately a performance array (metric-a1, metric-a2, ..., metric-an) corresponding to the path A and a performance array (metric-b1, metric-b2, ..., metric-bn) corresponding to the path B, metric-a1, metric-a2, ..., and metric-an are specific values of corresponding target factors on the path A, and metric-b1, metric-b2, ..., and metric-bn are specific values of corresponding target factors on the path B. Then, values of elements at corresponding locations in the m performance arrays are compared, and a comparison result may have the following different cases:
(1) A value of each element in a first performance array is greater than or equal to a value of an element at a corresponding location in a second performance array.

In this case, it is determined that a network path corresponding to first performance array is the second dominant network path, and a network path corresponding to second performance array is a non-dominant network path, where the first performance array and the second performance array are any two of the m performance arrays.

For ease of understanding, the foregoing example is still used for description. Because the performance array corresponding to the path A is (metric-a1, metric-a2, ..., metric-an), and the performance array corresponding to the path B is (metric-b1, metric-b2, ..., metric-bn), if each indicator in the performance array of the path A is greater than or equal to an indicator at a corresponding location in the performance array of the path B, in other words, metric_a1≥metric_b1, metric_a2≥metric_b2, ..., and metric_an≥metric_bn, it is considered that the path A is the second dominant network path. Correspondingly, the path B is a non-dominant path, and the path B is removed from the target paths (that is, is not recorded).

(2) A value of a first element in a first performance array is greater than or equal to a value of an element at a corresponding location in a second performance array, and a value of a second element is less than or equal to a value of an element at a corresponding location in the second performance array.

In this case, it is determined that both a network path corresponding to the first performance array and a network path corresponding to the second performance array are second dominant network paths, where the first element and the second element are any two elements in the first performance array.

For ease of understanding, the foregoing example is also used for description. Because the performance array corresponding to the path A is (metric-a1, metric-a2, ..., metric-an), and the performance array corresponding to the path B is (metric-b1, metric-b2, ..., metric-bn), if each indicator in the performance array of the path A is greater than or equal to an indicator at a corresponding location in the performance array of the path B, in other words, metric_a1≥metric_b1, metric_a2≥metric_b2, ..., and metric_an≥metric_bn, it is considered that the path A is the second dominant network path (that is, the first case). Otherwise (for example, metric_a1≥metric_b1, and metric_a2<metric_b2), it is considered that which one of the path A and the path B is better cannot be determined through comparison (where a network performance requirement of a specific application is ignored), and both the two paths need to be reserved as second dominant paths.

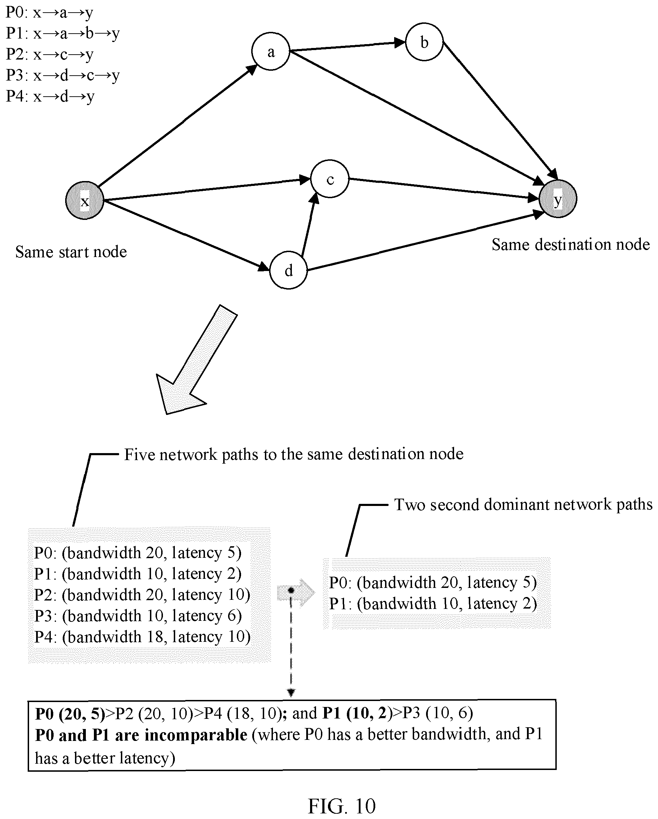

To further deepen understanding of the partial order comparison method, the following uses a specific example to describe the foregoing comparison process. For details, refer to FIG. 10. Two target factors "bandwidth+latency" are used as an example. It is assumed that there are a total of five (that is, m=5) network paths that use a same network node x as start points and that reach a same destination node y (where the network path may pass through one or more other network nodes), and the network paths are separately P0, P1, P2, P3, and P4. Specific network nodes involved in the network paths are shown in FIG. 10, and performance arrays of the network paths are separately P0: (bandwidth 20, latency 5), P1: (bandwidth 10, latency 2), P2: (bandwidth 20, latency 10), P3: (bandwidth 10, latency 6), and P4: (bandwidth 18, latency 10). It can be learned from the partial order comparison and screening method in this embodiment of this application that paths P2 and P4 do not need to be recorded because two attributes of each of the paths P2 and P4 are both worse than or equal to those of P0, the path P3 does not need to be recorded because two attributes of the path P3 are both worse than or equal to those of P1, and paths P0 and P1 are recorded as second dominant paths because which one of the two paths is better cannot be determined through comparison (because the bandwidth of the path P0 is better than that of P1, and the latency of the path P1 is better than that of P0).

It can be theoretically proved that the performance array-based partial order comparison method described in this embodiment of this application implements path information specification to the utmost extent, in other words, ensures accuracy of a multi-target-factor requirement while recording a minimum quantity of non-optimal paths. A proof process is as follows: It is assumed that all second dominant network paths obtained according to the performance array-based partial order specification method in this embodiment of this application cannot ensure the accuracy of the multi-target-factor requirement. In this case, it indicates that a local path of one or more hops in an end-to-end optimal path is not included in the second dominant network path specified according to the method in this embodiment of this application. Herein, it is assumed that PathM of a specific hop in the end-to-end optimal path is not included in the second dominant network path calculated according to the method in this embodiment of this application, and "PathM+path of another hop" forms a real multi-target-factor optimal path (that is, an error occurs in path calculation in this solution). In this case, according to a calculation rule of the second dominant network path, another path PathN can definitely be found in the second dominant network path calculated according to the method in this embodiment of this application, where all performance indicators of PathN are better than or equal to those of PathM (otherwise, a case in which which one of PathN and PathM is better cannot be determined through comparison may occur, and PathM also appears in the second dominant network path, which is contradictory to the assumption). Further, it may be obtained that performance of "PathN+path of the another hop" is better than or equal to that of "PathM+path of the another hop", in other words, in this application, an end-to-end path with better performance than the end-to-end optimal path is found, which is clearly not logical. Therefore, the assumption is wrong, in other words, the second dominant network path screened out according to the method in this embodiment of this application definitely includes the multi-target-factor end-to-end optimal path.

In conclusion, when partial order comparison is performed on the m network paths based on the n target factors, the network path that is determined as being more dominant or the network path that cannot be determined as being dominant or not dominant after the partial order comparison is used as the second dominant network path. Then, based on a specific requirement, the first dominant network path is obtained based on the obtained second dominant network path. It should be noted that, in this embodiment of this application, there are different cases in which the first dominant network path is obtained based on the second dominant network path. The following describes the different cases, including but not limited to:
Case 1: Each second dominant network path is used as a first dominant network path.

This case is usually applicable to a small network scale (for example, a maximum scale of an RTN is 100 network nodes), and therefore a quantity of second dominant network paths screened out according to the performance array-based partial order comparison method is small. Therefore, even if subsequent iterative calculation is performed based on full second dominant network paths, overall calculation overheads in a multi-target-factor scenario are not high. For example, in an RTN with 100 network nodes, calculation of all end-to-end optimal paths in the multi-target-factor scenario may be completed within hundreds of milliseconds.

Case 2: When there are at least p second dominant network paths, q paths are selected from the p second dominant network paths as first dominant network paths, where m≥p≥2, and p≥q≥1.

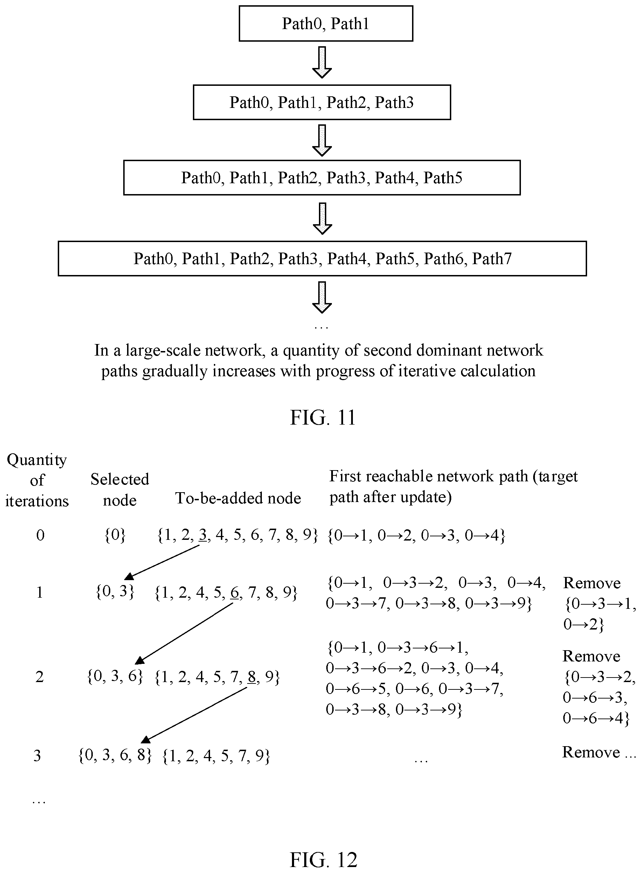

It is assumed that when the network path calculation method described in this embodiment of this application is applied to a super-large-scale network (for example, with a scale of tens of thousands of network nodes), a case in which a quantity of recorded second dominant network paths gradually increases with progress of iterative calculation may occur. In this case, performing iterative calculation based on full second dominant network paths also causes high calculation overheads. As shown in FIG. 11, in a super-large-scale network, a quantity of second dominant network paths recorded in each iteration is increasingly large: At the beginning, there are only two second dominant network paths to a specific destination node: Path0 and Path1. With progress of iterative calculation, a quantity of second dominant network paths to a subsequent destination node is expanded to 8 (Path0 to Path7). This also leads to increasingly low efficiency of network path calculation. In this case, if a service carried on the network is a real-time service, network path calculation efficiency deterioration affects real-time performance of the service.

To resolve this problem, this embodiment of this application provides an improvement solution, to further optimize calculation overheads in a multi-target-factor scenario in a large-scale network, and meet a requirement of a real-time service on fast calculation.

A specific improvement solution is the solution described in the case 2, to be specific, when there are at least p second dominant network paths, q paths are selected from the p second dominant network paths as first dominant network paths, where m≥p≥2, and p≥q≥1. In other words, when a quantity of second dominant network paths to a same destination node reaches a specific quantity p (for example, p=4), to ensure high efficiency of calculation, subsequent iterative calculation is not performed based on full second dominant network paths, but q (for example, q=2) paths are selected from the currently obtained second dominant network paths to perform iterative calculation. Therefore, calculation overheads are optimized. The selected second dominant network path is the first dominant network path, where a selection manner may be random selection, or selection performed according to a specific selection rule (for example, selecting a path with a smaller hop count or a larger bandwidth). This is not limited in this application. It should be noted herein that, in some implementations of this application, if calculation needs to be repeatedly performed for a plurality of rounds, an operation of selecting q paths from the p second dominant network paths as first dominant network paths in a first round may be random selection. However, in subsequent rounds of calculation, an optimal path in a first dominant network path selected in a previous round may be used as one of feasible solutions for iteration in a next round. For example, it is assumed that there are currently a total of 10 dominant paths, where the paths are separately paths 1 to 10. In a first round, paths 2, 3, and 7 are randomly selected, and it is found that an optimal path in the three paths is the path 3. In this case, the path 3 is recorded. In a next round of iterative calculation, three paths 1, 5, and 8 are randomly selected, and the local optimal path 3 obtained in the previous round is added. Therefore, four paths 1, 3. 5, and 8 participate in subsequent path calculation this time, and then a current local optimal path (for example, the path 5) is recorded. Iteration continues until a target path obtained in a last round reaches a convergence condition or a preset quantity of rounds is reached.

It should be noted herein that, regardless of whether the entity for executing this method is the source node or the control node, processes of performing step 704 by the entity for executing this method are similar, and therefore are not separately described herein.

705: Delete the first node from the to-be-added node set, and use the updated target path as a new first reachable network path.

After the updated target path is obtained, the first node may be deleted from the to-be-added node set, and the updated target path is used as the new first reachable network path.

FIG. 9 is still used as an example for illustration. Because there are a total of four first reachable network paths, where the paths are separately {0→1, 0→2, 0→3, 0→4}; and there are a total of five second reachable network paths (where the first node selected from the to-be-added node set is the node 3), where the paths are separately {0→3→1, 0→3→2, 0→3→7, 0→3→8, 0→3→9}, there are 4+5=9 obtained target paths, and the paths are separately {0→1, 0→3→1, 0→2, 0→3→2, 0→3, 0→4, 0→3→7. 0→3→8, 0→3→9}. In this case, the nine target paths are target paths before update. It is assumed that in the nine target paths, there are a total of two groups of paths that each include at least two network paths that use the node 0 as source nodes and reach a same destination node. One group is two network paths to the same destination node 1: {0→1, 0→3→1}, and the other group is two network paths to the same destination node 2: {0→2, 0→3→2}. It is also assumed that a first dominant network path finally obtained after a first group of network paths are compared is {0→1}, and a first dominant network path finally obtained after a second group of network paths are compared is {0→3→2}. In this case, paths {0→3→1, 0→2} are deleted from the nine target paths, and there are seven updated target paths: {0→1, 0→3→2, 0→3, 0→4, 0→3→7, 0→3→8, 0→3→9}. The updated target paths {0→1, 0→3→2, 0→3, 0→4, 0→3→7, 0→3→8, 0→3→9} are used as new first reachable network paths to participate in a subsequent process of repeatedly performing step 702 to step 705. In addition, in this iteration, after the node 3 is deleted from the to-be-added node set, network nodes further included in the to-be-added node set are {1, 2, 4, 5, 6, 7, 8, 9}.

It should be noted herein that, regardless of whether the entity for executing this method is the source node or the control node, processes of performing step 705 by the entity for executing this method are similar, and therefore are not separately described herein.

706: Repeatedly perform step 702 to step 705.

After the updated target path is used as the new first reachable network path, step 702 to step 705 are repeatedly performed until the to-be-added node set is empty.

For ease of understanding the repeated execution process, FIG. 12 is used as an example for illustration below. It is assumed that a network topology determined in the target network includes 10 network nodes in total, where the network nodes are separately nodes 1 to 9; the source node is the node 0, and other network nodes are nodes 1 to 9; and it can be learned based on the network topology that there are four adjacent nodes (namely, directly connected nodes) that the node 0 can reach, where the four adjacent nodes are separately the node 1, a node 2, a node 3, and a node 4. In this case, there are a total of four first reachable network paths that each use the source node as a start point and a directly connected node of the source node as an end point, and the paths are denoted as {0→1, 0→2, 0→3, 0→4} (where in this case, a quantity of iterations may be denoted as 0). In this case, it is determined whether the to-be-added node set is empty. It can be learned from FIG. 12 that the to-be-added node set is {1, 2, 3, 4, 5, 6, 7, 8, 9} in this case. It is assumed that a first node selected from the to-be-added node set is the node 3. In this case, in the existing network topology, it may be found that second reachable network paths that each use the node 0 as a start point and the node 3 as a relay are {0→3→1, 0→3→2, 0→3→7, 0→3→8, 0→3→9}.Therefore, there are a total of nine target paths: {0→1, 0→3→1, 0→2, 0→3→2, 0→3, 0→4, 0→3→7, 0→3→8, 0→3→9}. After partial order comparison is performed in the foregoing manner on network paths that are in the nine target paths and that reach a same destination node, paths {0→3→1, 0→2} are deleted from the nine target paths, and there are seven updated target paths: {0-1, 0→3→2, 0-3, 0→4, 0→3→7, 0→3→8, 0→3→9}. In this case, the to-be-added node set is {1, 2, 4, 5, 6, 7, 8, 9} (where in this case, a quantity of iterations may be denoted as 1). Then, in a second iteration (in other words, a quantity of iterations is denoted as 2), it is determined whether the to-be-added node set is empty. It can be learned from FIG. 12 that the to-be-added node set is {1, 2, 4, 5, 6, 7, 8, 9} in this case. It is assumed that a first node selected from the to-be-added node set is the node 6. In this case, in the existing network topology, it may be found that there are a total of six second reachable network paths that each use the node 0 as a start point and the node 6 as a relay: {0→3→6→1, 0→3→6→2, 0→6→3, 0→6→4, 0→6→5, 0→6}. There are a total of seven new first reachable network paths obtained in the first iteration, and the paths are {0→1, 0→3→2, 0→3, 0→4, 0→3→7, 0→3→8, 0→3→9}. In this case, there are 6+7=13 target paths obtained in the second iteration, and the paths are {0→1, 0→3→6→1, 0→3→2, 0→3→6→2, 0→3, 0→6→3, 0→4, 0→6→4, 0→6→5, 0→6, 0→3→7, 0→3→8, 0→3→9}. Similarly, after partial order comparison is performed on the nine target paths in the foregoing manner, partial order comparison is performed on network paths that are in the nine target paths and that reach a same destination node, to be specific, partial order comparison is performed on four groups of network paths: {0→1, 0→3→6→1}, {0→3→2, 0→3→6→2}, {0→3, 0→6→3}, {0→4, 0→6→4}. It is assumed that a result obtained after comparison is that {0→1, 0→3→6→1} are both second dominant network paths (in other words, which one is better cannot be determined through comparison), and {0→3→6→2}, {0→3}, and {0→4} are second dominant network paths. In this case, paths {0→3→2, 0→6→3, 0→6→4} are deleted from the 13 network paths, and there are 10 updated target paths: {0→1, 0→3→6→1, 0→3→6→2, 0→3, 0→4, 0→6→5, 0→6, 0→3→7, 0→3→8, 0→3→9}, and the 10 target paths are used as first reachable network paths in a third iteration. In this case, the to-be-added node set is {1, 2, 4, 5, 7, 8, 9} (where in this case, a quantity of iterations may be denoted as 2). Then, an operation of determining whether the to-be-added node set is empty and a subsequent operation process continue to be performed according to the foregoing similar steps until the to-be-added node set is empty.

It should be noted herein that, regardless of whether the entity for executing this method is the source node or the control node, processes of performing step 706 by the entity for executing this method are similar, and therefore are not separately described herein.

707: Determine, based on the network performance requirement of the to-be-transmitted data on the target device and from a last updated first reachable network path, a target network path that uses the source node as a start point and a destination node corresponding to the to-be-transmitted data as an end point, where the target network path is used to transmit the to-be-transmitted data.

If it is determined that the to-be-added node set is empty, in other words, there is no network node in the to-be-added node set, the first reachable network path obtained through the last update is a first reachable network path finally obtained in a current round.

It should be noted herein that, in this embodiment of this application, a quantity of rounds is different from a quantity of iterations. The quantity of rounds is a quantity of times of performing step 701 to step 706, and performing step 701 to step 706 once is one round. The quantity of iterations is a quantity of times of repeatedly performing step 702 to step 706 until the to-be-added node set is empty, and performing step 702 to step 705 once is one iteration. One round may include one or more iterations.

It should be further noted that it can be learned from step 704 that there are different cases in which the first dominant network path is obtained based on the second dominant network path, for example, the case 1 and the case 2. In some implementations of this application, for different cases, cases are slightly different, and the following separately describes the cases.
(1) For the case 1: each second dominant network path is used as a first dominant network path:
   This case is usually applicable to a small network scale (for example, a maximum scale of an RTN is 100 network nodes), and therefore a quantity of second dominant network paths screened out according to the performance array-based partial order comparison method is small. Therefore, even if subsequent iterative calculation is performed based on full second dominant network paths, overall calculation overheads in the multi-target-factor scenario are not high.

Therefore, in this case, because the end-to-end optimal path is definitely included in the first reachable network path obtained through the last update in the current round, a first target network path that uses the source node as a start point and the destination node corresponding to the to-be-transmitted data as an end point may be directly determined based on the network performance requirement of the to-be-transmitted data on the target device from the first reachable network path obtained through the last update in the current round, and the to-be-transmitted data is transmitted based on the first target network path. For example, a network node (for example, the source node or the control node) may record, in a multi-target-factor routing table, first reachable network paths that are obtained through a last update and that reach all other network nodes, then calculate, based on the network performance requirement of the to-be-transmitted data, an optimal path in a dominant network path to each destination node, and mark the optimal path. After optimal paths to all destination nodes are calculated, the network node reads a destination node IP address in an application data packet header, and forwards each data packet of the to-be-sent data to a next-hop network node according to an optimal path to the IP address.

For ease of understanding this process, FIG. 12 is still used as an example for illustration below. It is assumed that there are 12 first reachable network paths obtained through the last update in the current round, where the paths are separately {0→1, 0→3→6→1, 0→7→2, 0→8→3, 0→4, 0→6→5, 0→6, 0→3→9→7, 0→2→8, 0→3→8, 0→1→8, 0→7→9}. It is assumed that the to-be-transmitted data on the target device (assumed as a host 1 and accessing the node 0) needs to be sent to a destination device (assumed as a host 2), the destination device accesses the node 8, and the network performance requirement of the to-be-transmitted data is as follows: A path with a lowest latency is preferentially selected; and when a plurality of paths have the same lowest latency, a path with a lowest packet loss rate is preferentially selected (that is, two target factors "latency+packet loss rate" are considered). It can be learned from the foregoing descriptions that the destination node corresponding to the to-be-transmitted data is the node 8, and it can be learned from the first reachable network paths obtained through the last update in the current round that there are a total of three network paths that each use the node 0 as a start point and the destination node 8 corresponding to the to-be-transmitted data as an end point, where the paths are separately {0→2→8, 0→3→8, 0→1→8}. Then, an optimal path obtained based on the network performance requirement of the to-be-transmitted data is {0→3→8}, and the path {0→3→8} is the first target network path. Finally, the to-be-transmitted data is transmitted based on the first target network path {0→3→8}.

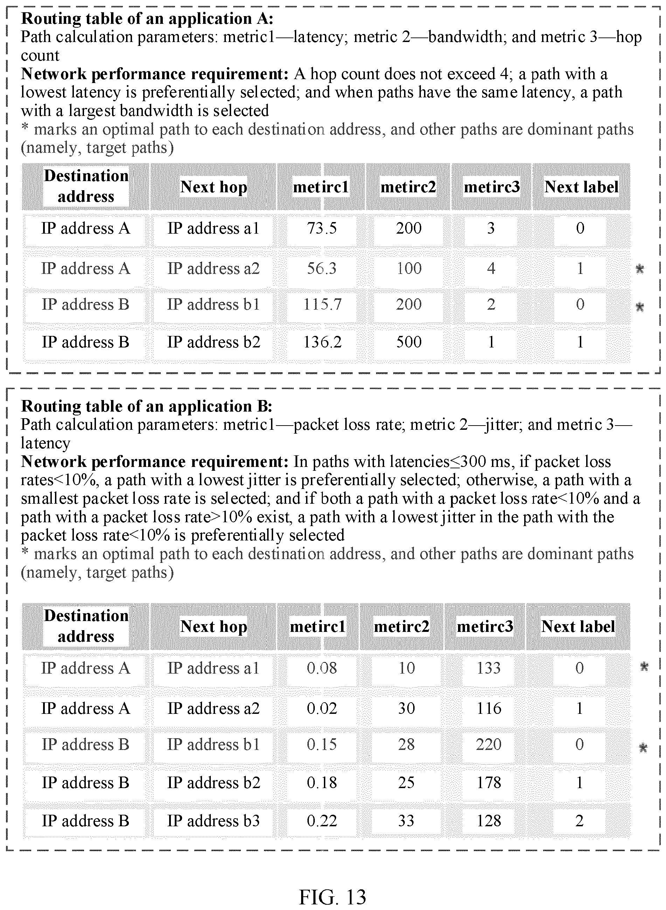

It should be noted herein that, in conventional routing, after IP addresses are determined, a routing entry is also fixed (for example, a cost-optimal route is always used), and each network node performs address-by-address routing. Therefore, as long as source and destination IP addresses are determined, a unique determined route is calculated for this pair of addresses based on a routing table. Different from an IGP single-target-factor scenario, this embodiment of this application is for the multi-target-factor scenario. For a same network performance requirement, any two network nodes in a network may need to record a plurality of dominant paths instead of a single optimal path. In addition, in the multi-target-factor scenario, there may be a plurality of different optimal paths for same source and destination nodes due to different network performance requirements of applications, and the network node also needs to distinguish between paths of different service data. In this case, this application further designs an application-by-application (where the application may be a specific application, or may be an application type (for example, a social type or a game type)) distributed multi-target-factor routing table. For details, refer to FIG. 13. Because this embodiment of this application is for the multi-target-factor scenario, multi-target-factor path calculation may be performed for SLA requirements of different applications. Same source and destination nodes may use different paths due to different carried services, so that service-by-service routing is performed. Therefore, a case shown in FIG. 13 may occur. For a same source-destination address pair, because network performance requirements of an application A and an application B are different, different routing tables are required to record optimal paths of different applications, and a routing table for each application needs to record different performance indicators (Metric 1, Metric2, Metric3, ...) of paths to facilitate iterative calculation. In addition, according to the network path calculation method in this embodiment of this application, even in a same application routing table, a plurality of different first reachable network paths (namely, updated target paths) and corresponding path performance may be recorded for a same destination address. Therefore, an optimal path for a specific application needs to be indicated in an entry. After a user inputs a command for displaying a routing table, an application-by-application routing table needs to be displayed, and a specific network performance requirement of each type of service and an optimal path in a plurality of first reachable network paths calculated by using the solution of this application under the network performance requirement further need to be specified. As shown in FIG. 13, * is used to identify an optimal path, and other entries recorded in the routing table are all first reachable network paths. In this embodiment of this application, the multi-target-factor routing table that matches the network path calculation method in this embodiment of this application is designed, so that differentiated routing between a same source-destination address pair based on different applications is implemented, and a limitation that a conventional routing table can only be used for address pair-by-address pair routing is broken through.

It should be noted that, in this embodiment of this application, the application A and the application B may be specific applications (for example, the application A is WeChat, and the application B is QQ), or may represent application types (for example, the application A is a social application, and the application B is a shopping application). The application types may be distinguished in advance, and each specific application may be classified into a specific application type. Then, the network node may maintain a routing table of each specific application or application type. One application or application type corresponds to one network performance requirement.

It should be further noted that FIG. 13 is a specific implementation of the multi-target-factor routing table shown in this embodiment of this application. In some other implementations of this application, there may be routing table designs in other presentation forms. This is not limited in this application. Any routing table may be referred to as the multi-target-factor routing table in this embodiment of this application provided that application-by-application (or may be referred to as service-by-service) routing is used for the routing table, each type of application has one routing table (different from another solution in which IP-by-IP routing is used, and all services share one entry), and the routing table records a plurality of performance parameters of each path. It should be noted that the multi-target-factor routing table needs to specify a specific network performance requirement of each type of application and an optimal path in a plurality of dominant paths calculated by using the solution in this embodiment of this application under the network performance requirement. Otherwise, data cannot be correctly forwarded.

In conclusion, in the network path calculation method corresponding to the case 1, a record of a local non-optimal path is introduced, and end-to-end path iterative calculation is allowed to be performed based on the local non-optimal path, to ensure accuracy of the optimal path in the multi-target-factor scenario in which "local optimal path+local optimal path+...+local optimal path≠global optimal path". In addition, according to the dominant path screening method based on performance vector-based partial order comparison, it is ensured that a minimum quantity of non-optimal path records are introduced while path calculation accuracy is ensured, so that calculation overheads are optimized to the greatest extent, and high efficiency of optimal path calculation is ensured. In addition, according to the dominant path screening method based on performance array-based partial order comparison, a non-dominant path that does not need to be recorded may be filtered out to the greatest extent in an iterative calculation process, so that calculation overheads are optimized to the greatest extent, and high efficiency of calculation is ensured.

(2) For the case 2: when there are at least p second dominant network paths, q paths are selected from the p second dominant network paths as first dominant network paths, where m≥p≥2, and p≥q≥1:
The case 2 is an improvement solution for a large-scale network, and a specific implementation may be simply summarized as follows: With progress of iterative calculation, when a quantity of recorded second dominant network paths to a same destination node reaches a specific quantity p (for example, p=4), to ensure high efficiency of calculation, subsequent iterative calculation is not performed based on full second dominant network paths, but q (for example, q=2) paths are selected from the currently obtained second dominant network paths to perform iterative calculation. Therefore, calculation overheads are optimized. For a service having a special requirement (for example, a voice or video service having a high real-time requirement), a second target network path that uses the source node as a start point and the destination node corresponding to the to-be-transmitted data as an end point may be determined based on the network performance requirement of the to-be-transmitted data on the target device from the first reachable network path obtained through the last update in the current round, and the to-be-transmitted data is transmitted based on the second target network path. This process is similar to the processing process corresponding to the case 1. Details are not described herein.

However, the first reachable network path obtained through the last update in the current round is obtained based on the selected second dominant network path. In this way, the first reachable network path calculated based on partial information in the current round may not include the end-to-end optimal path. Based on this, in some other implementations of this application, a multi-round calculation method is used to gradually converge an end-to-end path calculated based on a part of selected second dominant network paths each time to a global optimal path. Specifically, step 701 to step 706 may be repeatedly performed until a first reachable network path obtained in a last round reaches a convergence condition or a preset quantity (for example, 50) of rounds is reached.

A random selection manner is used as an example, and a specific multi-round calculation method is as follows: During a next round of first reachable network path calculation, when a quantity of second dominant network paths to a same destination node reaches the specific quantity p (for example, p=4), a method of randomly selecting q second dominant network paths from the second dominant network paths to perform subsequent iterative calculation is also used. However, a difference from the previous round of calculation may be that in this round of calculation, a local optimal path recorded in the previous round may also be added to the second dominant network path randomly selected in this round, and the local optimal path and the second dominant network path jointly participate in subsequent iterative calculation. In this way, after a plurality of rounds of repeated calculation, the end-to-end path calculated based on random partial information is finally converged to a global optimal solution.

It should be noted herein that, in some implementations of this application, it is assumed that, based on the network performance requirement of the to-be-transmitted data on the target device, a target network path on which the to-be-transmitted data is being transmitted in the current round is the second target network path, and a target network path (for example, an optimal target network path) that meets a preset condition and that is obtained after the next round of calculation or a plurality of rounds of calculation is a third target network path. This means that network performance of the third target network path is better than that of the second target network path. In this case, a transmission path of the to-be-transmitted data may be switched from the second target network path to the third target network path. It should be noted herein that switching manners may include but are not limited to:

### a. Any-time switching mode

This switching mode is applicable to single-round calculation. Specifically, switching is performed as long as there is a path (to be specific, the third target network path), in a first reachable network path calculated in the next round, whose network performance is better than that of the second target network path on which data transmission is currently being performed. A principle of such switching is: Switching is performed as long as there is a better target network path. An advantage of such any-time switching is that the transmission path of the to-be-transmitted data is always kept on an optimal network path calculated currently, to improve transmission efficiency.

In addition, it should be further noted that, in some implementations of this application, the transmission path may alternatively be switched after a first reachable network path is calculated in each round. This is because in each next round of calculation, if a record of an optimal path of a previous round is introduced, the transmission path may be optimized to a better path in each time of switching. A specific implementation of the any-time switching mode is not limited in this application.

### b. One-time switching mode

This switching mode is applicable to multi-round calculation. Specifically, before the first reachable network path obtained in the last round reaches the convergence condition or the preset quantity of rounds is reached, the to-be-transmitted data is always transmitted on the second target network path obtained in the current round (to be specific, a first round). Then, after all rounds end, the third target network path (for example, an optimal target network path in all the rounds) that meets the preset condition is selected from first reachable network paths obtained in all the rounds for switching. An advantage of such one-time switching is that the transmission path of the to-be-transmitted data does not need to be changed frequently, to ensure stability of the transmission path.

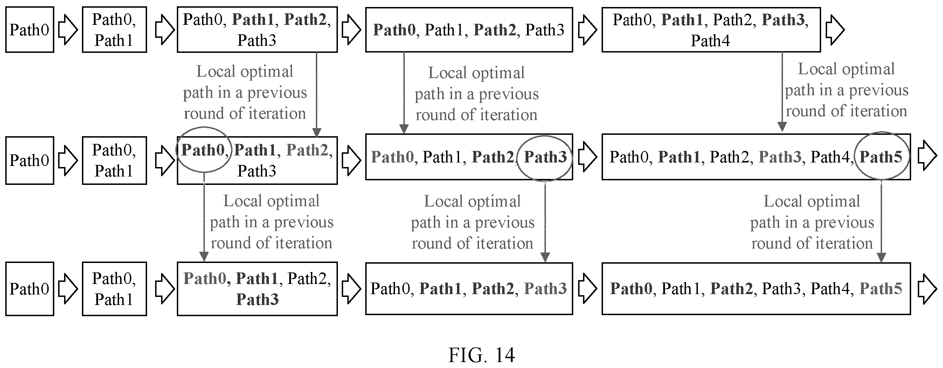

For ease of understanding, the following uses a calculation process shown in FIG. 14 as an example for description. In FIG. 14, a horizontal direction indicates an iterative calculation process of first reachable network paths in dominant path trees of each round, and each block records a current quantity of dominant paths to a current destination node. A vertical direction indicates calculation of first reachable network paths in dominant path trees of a plurality of rounds, and an information exchange relationship between each round and a next round.

It can be learned from FIG. 14 that, during a first round of first reachable network path calculation (namely, a first round of target path calculation process), when calculation proceeds to a third destination node (assumed as a node 3), a quantity of second dominant network paths reaches 4 (Path0, Path1, Path2, and Path3). Herein, it is assumed that p=4. In this case, to optimize calculation overheads, two (that is, q=2) paths are randomly selected from the four second dominant network paths to participate in target path iterative calculation of a next network node (assumed as a node 4). As shown in FIG. 14, paths randomly selected for the node 3 in the first round of calculation are Path 1 and Path 2, and Path 2 has better performance in the two paths. It is assumed that four paths are also calculated during subsequent second dominant network path calculation of the node 4. Similarly, two paths (Path0 and Path2) are randomly selected to participate in target path iterative calculation of a next network node (assumed as a node 5), and the path Path0 with optimal performance in the two paths is recorded. The rest may be deduced by analogy, and the procedure ends until target path calculation of all destination nodes is completed. Because an amount of information for iterative calculation starts to be reduced from the node 3, each end-to-end path calculated based on partial information is not globally optimal. Therefore, first reachable network path calculation is subsequently performed again for a plurality of rounds. In addition, after the current round of first reachable network path calculation ends, for a latency-sensitive service, data may be first transmitted along a currently calculated approximate optimal path. If the approximate optimal path is optimized in subsequent calculation, a transmission path of the service data may be switched at any time, to further improve quality of service.

During a second round of first reachable network path calculation, similarly, four second dominant network paths are calculated when calculation proceeds to the third destination node, and two paths are also randomly selected to participate in target path calculation of the node 4. It is assumed that Path0 and Path1 are randomly selected in the second round, and the optimal random path Path2 of the node 3 in the previous round is added, so that a total of three paths (Path0, Path1, and Path2) participate in target path calculation of the node 4, and the path Path0 with optimal performance in the three paths is recorded. Similarly, after four second dominant network paths are calculated for the node 4, two paths are also randomly selected to participate in target path calculation of the node 5. It is assumed that two paths Path2 and Path3 are randomly selected in the second round, and the optimal random path Path0 in the previous round is added, so that a total of three paths (Path0, Path2, and Path3) participate in target path calculation of the node 5. The rest may be deduced by analogy, and the procedure ends until target path calculation separately corresponding to all the destination nodes is completed. A path randomly selected in the second round of calculation may be different from that in the previous round, and an optimal path in the previous round is added to participate in path calculation in the current round. Therefore, after the current round of calculation, an optimal network path to each destination node may change. In this case, to-be-transmitted data that has been transmitted based on a calculation result in the previous round may be switched to a new path (namely, a third target network path) for continuous transmission (herein, an any-time switching mode is used as an example).

Similarly, during a third round of first reachable network path calculation, two second dominant network paths are still randomly selected for each destination node, and an optimal path in paths selected in the second round is added, so that a total of three paths participate in target path iterative calculation of a next node. Then, an optimal path from a source node to each destination node is further updated. In this way, after a plurality of rounds of repeated calculation, an end-to-end path calculated based on randomly selected local paths is finally converged to a global optimal path, which is the same as a calculation result obtained based on full dominant paths. However, an advantage of this embodiment of this application is that an approximate optimal path may be first calculated for data transmission initiation of a real-time service, and a current transmission path is gradually optimized and adjusted to an optimal path in a service transmission process. This is especially applicable to a large-scale network.

In addition, it should be noted that, in this embodiment of this application, because transmission of to-be-transmitted data starts after the first round of first reachable network path calculation ends, an optimal path to a destination node corresponding to the to-be-transmitted data may be updated after each subsequent round of calculation is completed. Therefore, a transmission path of the data may be frequently adjusted, and a data transmission disorder problem may be caused when the transmission path is switched in a transmission process of the data.

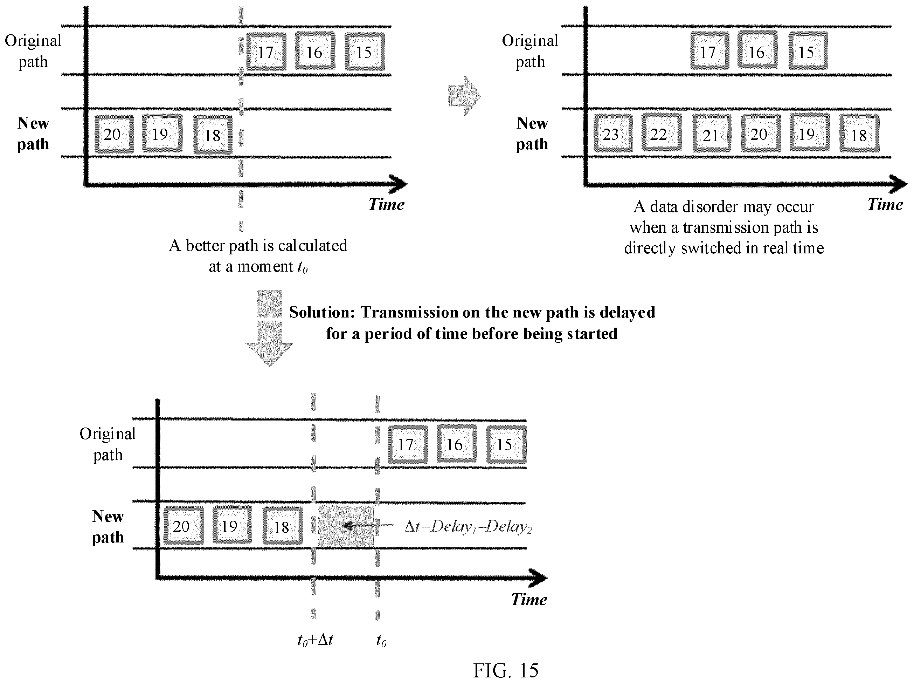

FIG. 15 shows a data transmission disorder problem caused by path switching. After a data packet 17 of service data is transmitted, a network node calculates a new optimal path, and switches subsequent data transmission (data from a data packet 18) to the new path for performing. Because a latency of the new path is better than that of an original path, a sequence of data packets arriving at a destination node is disordered. For example, the data packet 18 and a data packet 19 arrive at the destination node before a data packet 15. However, in a typical TCP protocol, when a data disorder is found, disordered data is considered as lost packets. Consequently, data retransmission is initiated, and this deteriorates transmission performance.

In view of this, this embodiment of this application further provides a solution to resolving the data disorder problem. To be specific, when obtaining a switching instruction, a network node (for example, the source node) waits for preset duration and then initiates, on a new path (namely, the third target network path), transmission of a non-transmitted data packet in the to-be-transmitted data. A specific solution is also shown in FIG. 15. After the new transmission path is calculated, the network node waits for a period of time Δt, and then initiates subsequent data transmission on the new path. In some implementations of this application, waiting time Δt may be a latency difference between the new path and the old path. In this way, it can be ensured that a first data packet (namely, the data packet 18) transmitted on the new path does not arrive at the destination node earlier than a last packet (namely, the data packet 17) transmitted on the original path, and therefore implement order-preserving of data transmission in a path switching process.

In conclusion, the network path calculation method corresponding to the case 2 improves real-time performance of a network service in a large-scale network in the multi-target-factor scenario. In this solution, an end-to-end optimal path is not precisely calculated in one time. In this way, calculation overheads are excessively high, and the real-time performance of the network service is affected. Correspondingly, in this solution, a method for calculating an optimal path in one time in conventional routing is improved, and a progressive calculation method combining "random selection of a part of dominant paths" and "a plurality of rounds" is designed. To be specific, an approximate end-to-end optimal path is quickly calculated based on a small amount of path information in a first round of calculation, so that service data transmission of a real-time service can be initiated on the approximate optimal path in a timely manner. Then precision of an approximate optimal solution is continuously optimized through a plurality of rounds of iterative calculation until a real optimal path is obtained through convergence. In addition, for the data transmission disorder problem that may be caused by path switching, delayed transmission is further used to implement order-preserving of service data during path switching.

It should be noted that the network path calculation method described in this embodiment of this application is a general method, and may be deployed in a network node in a distributed manner, or may be implemented in a centralized controller through traversal. The method may be applied to an overlay network, or may be applied to an underlay network, and may be used to calculate an optimal path based on any network performance requirement.

To further understand the solutions in embodiments of this application, the following uses two examples as representatives to describe implementation processes of the network path calculation method provided in embodiments of this application in specific application scenarios.

### Example 1: Audio/video service routing scenario in an RTN

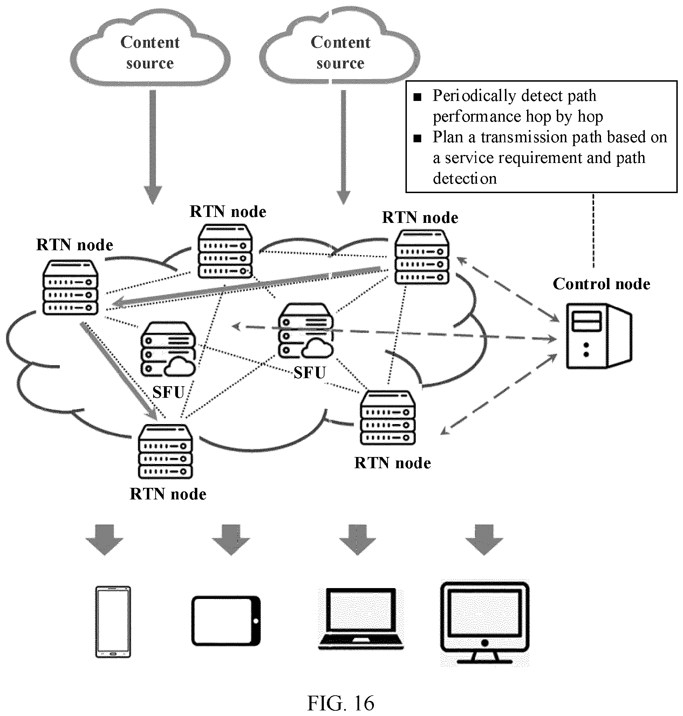

FIG. 16 is a schematic diagram of an application scenario of audio/video service routing in an RTN according to an embodiment of this application. A network node in the RTN may be referred to as an RTN node or an RTN server. The network path calculation method provided in embodiments of this application may be implemented in the RTN shown in FIG. 16. Because the RTN is an overlay network, a routing policy may be customized on a centralized control node through application layer software, and there is no need to change hardware of a physical device, so that implementation is easy. In addition, for an audio/video service carried in the RTN, a plurality of factors such as a latency, a jitter, and a packet loss rate in the network usually need to be comprehensively considered during transmission path calculation. An application scenario matches the solutions in embodiments of this application.

In this example, it is assumed that network performance requirements of the audio/video service are summarized as follows:
Case 1: When packet loss rates of a plurality of end-to-end paths are less than 10%, a path with a lowest latency is preferentially selected; and when a plurality of paths have the same lowest latency, a path with a lowest latency jitter is preferentially selected.
Case 2: When packet loss rates of a plurality of end-to-end paths are all 10% to 20%, a latency of 50 ms is converted into a packet loss rate of 10%, so that the latency and the packet loss rate are unified into a comprehensive performance indicator, and a path with an optimal comprehensive performance indicator is preferentially selected.
Case 3: When packet loss rates of a plurality of end-to-end paths are all greater than 20%, a path with a lowest packet loss rate is preferentially selected; and when a plurality of paths have the same lowest packet loss rate, a path with a lowest latency is preferentially selected.

When two or more of cases 1, 2, and 3 coexist, for example, in all end-to-end paths, there is a path with a packet loss rate less than 10%, a path with a packet loss rate greater than 20%, and a path with a packet loss rate of 10% to 20%, a path is selected according to a principle that "the case 1 is prior to the case 2 and the case 2 is prior to the case 3". If a path in the case 1 exists, an optimal path in the case 1 is preferentially returned; if no path in the case 1 exists, an optimal path in the case 2 is preferentially returned.

In addition, the RTN has a unified management node (namely, the control node, where the RTN usually has such a management node; if there is no management node, each RTN node needs to separately calculate a target path; and that the control node is an entity for executing this method is used as an example for description), and the management node is responsible for collecting performance measurement data (including measurement of a latency, a jitter, and a packet loss rate) between network nodes and delivering the performance measurement data to each RTN node. A path calculation process is also uniformly completed on the control node, and a specific calculation result is delivered to each RTN node. According to current network calculation logic of the RTN, specific implementation steps of the solution in this example in a multi-target-factor scenario may be as follows:

### Step 1: The control node collects RTN information.

This step is performed by the control node of the RTN periodically and continuously during operation time of the entire RTN (regardless of whether there is a specific data transmission service). Specific operations are as follows:
1.1: The control node collects performance measurement data of the RTN at an interval of a specific time period (for example, one minute), where specific performance indicators of network measurement include a latency, a jitter, and a packet loss rate.
1.2: The control node determines connectivity between RTN nodes based on a performance measurement result (namely, the performance measurement data) (for example, if a packet loss rate exceeds 90%, it is considered that two nodes are not connected), and obtains, through integration based on a connectivity status between every two RTN nodes, a topology architecture of the RTN, namely, a network topology.
1.3: When a device (for example, a terminal device such as a mobile phone, a personal computer, or a smartwatch) accesses an RTN node, the RTN node notifies the control node of an IP address of the device and an RTN node identifier, and the control node completes a mapping table between a device IP and an RTN node. After the mapping table is completed, the control node replies to the corresponding RTN node.
1.4: After the foregoing steps end, the control node obtains a periodically updated mapping table between a device IP and an RTN node, and a periodically updated RTN topology and performance measurement data.

### Step 2: A source device notifies a network performance requirement of a service.

This step is jointly performed by the source device and an RTN node, and is started when a specific application of the source device needs to initiate data transmission. A specific operation procedure is as follows:
2.1: The source device (for example, a host 1) accesses a specific RTN node in the RTN, and the RTN node notifies the control node of information about the host 1 through step 1.3.
2.2: After receiving a reply from the control node that performs step 1.3, the RTN node replies to the host 1 and allows the host 1 to initiate data transmission.
2.3: The host 1 notifies the RTN node accessed by the host 1 of an IP address of a destination node and the network performance requirement of the service, and the RTN node further feeds back the IP address of the destination node and the network performance requirement of the service to the control node.

It should be noted herein that each time a new service on the host 1 needs to initiate data transmission, steps 2.1 to 2.3 need to be performed to notify the RTN node and the control node of a communication address of the different service and a network performance requirement of the service.

Step 3: The control node performs target path calculation in the multi-target-factor scenario and delivers a routing table. This step is performed after the control node receives service network performance of the host 1 that is forwarded by the RTN node, and is performed by the control node. The host 1 can perform a data transmission operation only after this step ends. A specific operation procedure is as follows:
3.1: The control node receives the network performance requirement of the service on the host 1 that is forwarded by the RTN node.
3.2: The control node screens out network performance indicators concerned by the application (where in this example, the performance indicators concerned by the application are the latency, the packet loss rate, and the jitter) from a local measurement information record (namely, the performance measurement data in 1.1), forms performance arrays (latency, packet loss rate, and jitter) of hop-by-hop links, and matches the performance arrays to segments of overlay path in the RTN topology one by one.
3.3: The control node finds, in the node mapping table based on an IP address of the host 1 and an IP address of a destination device (for example, a host 2), IDs of RTN nodes accessed by the host 1 and the host 2, where the two RTN nodes are separately referred to as a source RTN node and a destination RTN node.
3.4: The control node performs the network path calculation method in embodiments of this application by using the source RTN node as a source node and all other RTN nodes as destination nodes, and using the selected indicators (that is, the latency, the packet loss rate, and the jitter) in the performance array as target factors. Specific execution steps are as follows:
   3.4.1: Include the source RTN node in a target path (which may also be referred to as a dominant path tree), and include all the other RTN nodes in a to-be-added node set.
   3.4.2: Calculate a reachable network path from the source node to a reachable destination node (namely, a directly connected node), and update path performance of the reachable network path into the dominant path tree.
   3.4.3: Determine whether the to-be-added node set is empty, and go to different branch steps based on determining results:
      a: If the to-be-added node set is not empty, go to step 3.4.4 to update a to-be-added node (namely, the first node described above) to the dominant path tree.
      b: If the to-be-added node set is empty, go to step 3.4.5 to calculate a dominant path (namely, the target path described above) to each RTN node.
   3.4.4: Select a new RTN node from the to-be-added node set, and add the RTN node to the dominant path tree. Specific execution steps are as follows:
      3.4.4.1: Select, from the to-be-added node set, an RTN node with lowest latencies to all nodes in the dominant path tree, and add the RTN node to the dominant path tree.
      3.4.4.2: Use the newly added node as a relay, and update a set of reachable paths to all destination nodes that use the new node for relaying.
      3.4.4.3: Perform partial order comparison on all reachable paths of each RTN node in the dominant path tree based on the three factors, that is, "the latency, the packet loss rate, and the jitter", and record a dominant path.
      3.4.4.4: Record the new dominant path to each node in the dominant path tree, and delete the node selected this time from the to-be-added node set.
      3.4.4.5: An update of the dominant path tree ends, and the process returns to step 3.4.3 to continue to determine whether the dominant path tree needs to be updated.
   3.4.5: Calculate an optimal path from the source RTN node to any destination RTN node (where a destination RTN node is determined when a specific destination device to which service data is to be sent is determined, so that all the other RTN nodes each may be the destination RTN node). Specific execution steps are as follows:
      3.4.5.1: Classify, based on ranges to which packet loss rates belong, all dominant paths to the destination node into three cases: a case 1 (packet loss rate<10%), a case 2 (10%≤packet loss rate≤20%), and a case 3 (packet loss rate>20%).
      3.4.5.2: Go to different branch steps based on whether a quantity of paths in the case 1/the case 2/the case 3 is 0:
         a: If there is a dominant path in the case 1, select a path with an optimal latency from the dominant path in the case 1 as the optimal path; and if a plurality of paths have the same optimal latency, select a path with a lowest jitter from the plurality of paths with the optimal latency as the optimal path for recording.
         b: If there is no dominant path in the case 1, but there is a dominant path in the case 2, for all dominant paths in the case 2, uniformly convert two factors, that is, the packet loss rate and the latency, into a comprehensive factor metric_total in a calculation manner of "metric_total=packet loss rate+latency/5", and select a path with a smallest metric_total as the optimal path for recording.
         c: If there is no dominant path in both the case 1 and the case 2, indicating that all the dominant paths belong to the case 3, select a path with a lowest packet loss rate from all the dominant paths as the optimal path; and if a plurality of paths have the same lowest packet loss rate, select a path with a lowest latency from the plurality of paths with the lowest packet loss rate as the optimal path for recording.
      3.4.5.3: Deliver optimal path information and dominant path information (that is, the target path) to RTN nodes of each hop along the path to form a local routing table. It should be noted that, in some implementations of this application, the local routing table may include only the dominant path information, and then each RTN node calculates the optimal path based on the network performance requirement of the service. Alternatively, the local routing table may be formed after the control node calculates the optimal path based on the network performance requirement of the service, and then directly delivers the optimal path information to the RTN nodes of each hop. It should be further noted that an operation of forming the local routing table may be completed by the control node, or may be completed by each RTN node. This is not limited in this application.
3.5: Each RTN node along the path receives the optimal path information and/or the dominant path information delivered by the control node and forms the local routing table (namely, the multi-target-factor routing table described above), or each RTN node along the path receives the local routing table delivered by the control node.

Step 4: The source device initiates service data transmission, and the RTN node forwards a data packet. This step is jointly performed by the source device and all RTN nodes along the optimal path, and continues during an entire service data transmission process. A specific operation procedure is as follows:
4.1: After receiving the routing table delivered by the control node (or autonomously forming the local routing table), the RTN node replies to the control node with acknowledgment information.
4.2: After receiving acknowledgment information of all the RTN nodes on the optimal path, the control node initiates a data transmission permission signal to the source RTN node.
4.3: After receiving the data transmission permission signal, the source RTN node forwards the signal to the host 1.
4.4: After receiving the data transmission permission signal, the host 1 sends the service data to the source RTN node.
4.5: The source RTN node and a subsequent RTN node on the optimal path forward the data to the destination RTN node along the optimal path based on information in the routing table, and the destination RTN node forwards the data to the host 2.
4.6: After the service data transmission is completed, the host 1 terminates the data transmission, and the RTN node on the optimal path stops forwarding the data packet.

It should be noted that, in the four main steps of the foregoing solution, step 1, step 2, and step 4 are a data transmission procedure specific to the RTN, and the three steps change with an application scenario. For example, a data transmission procedure in an underlay physical device router is different from the steps in this embodiment (but an overall method is similar). Step 3 is a core implementation of this solution.

It can be found from the procedure in step 3 that a subsequent iterative calculation result is determined by the dominant path instead of the optimal path. Therefore, the network performance requirement of the service is required only when the optimal path is calculated in step 3.4.5. In the previous iteration steps 3.1 to 3.4, information recorded in a routing table entry is determined by a set of dominant paths whose performance arrays are incomparable with each other. Therefore, if the network performance requirement of the service changes but the target factors remain unchanged (for example, optimal path calculation is still performed based on the three factors: the latency, the packet loss rate, and the jitter, but a network performance requirement is different from that in this solution), in step 3, only an optimal path screening method needs to be updated in step 3.4.5, and no modification or adjustment needs to be performed in the previous steps. Therefore, this solution has a strong adaptability to a change of the network performance requirement of the service.

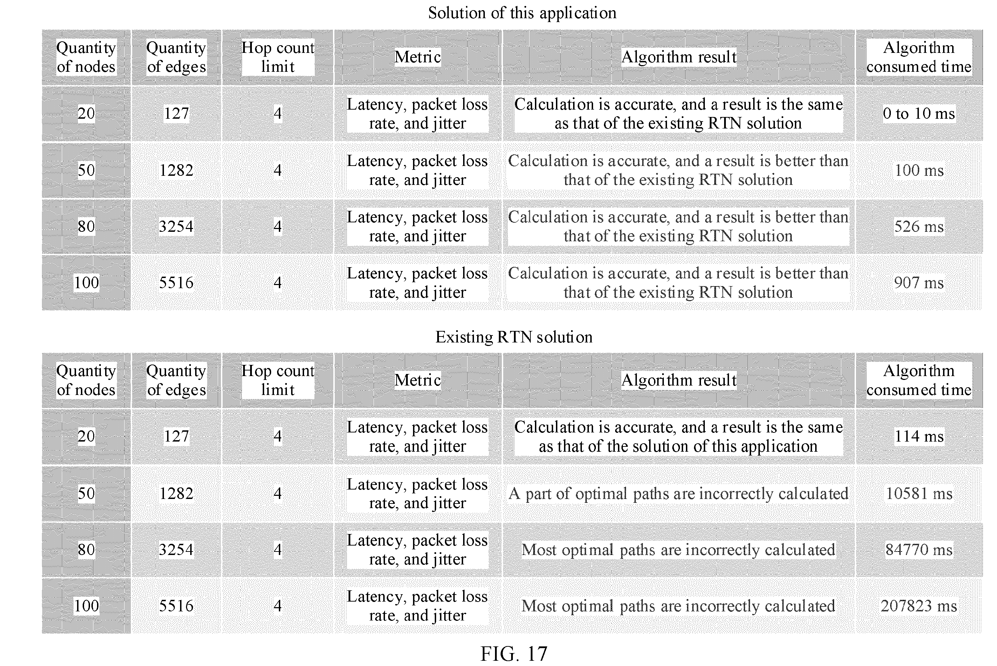

To further describe technical effect in this embodiment of this application, this application obtains current network data of a consumer cloud RTN and a current RTN solution in the multi-target-factor scenario, and further compares, in RTNs with different scales, performance and accuracy of this solution and the existing RTN solution in the multi-target-factor scenario. A comparison result is shown in FIG. 17.

Different from the solution of this application, a calculation method currently used by the consumer cloud RTN in the multi-target-factor scenario is the foregoing described approximate optimal path algorithm based on single-target-factor KSP. Specifically, in the existing RTN method, 10 paths with lowest end-to-end latencies are calculated based on a KSP algorithm, to form a candidate path set. Then, an optimal path in the 10 candidate paths is screened out based on a network performance requirement that "the case 1 is prior to the case 2 and the case 2 is prior to the case 3", and the optimal path is used as an end-to-end optimal path for recording.

A disadvantage of the method is also described above. In a network with strong heterogeneity, a problem of inaccurate calculation is very likely to occur. In this solution, accurate optimal path calculation based on a network performance requirement of an application may be implemented in a set of top 10 paths with lowest latencies. However, a multi-target-factor optimal performance path may not necessarily appear in the set of the top 10 paths with the lowest latencies. For example, the top 10 paths with the lowest latencies may have other poor factors such as packet loss rates, bandwidths, or costs, and in this case, a path with global optimal performance is missed in the set of the top 10 paths with the lowest latencies.

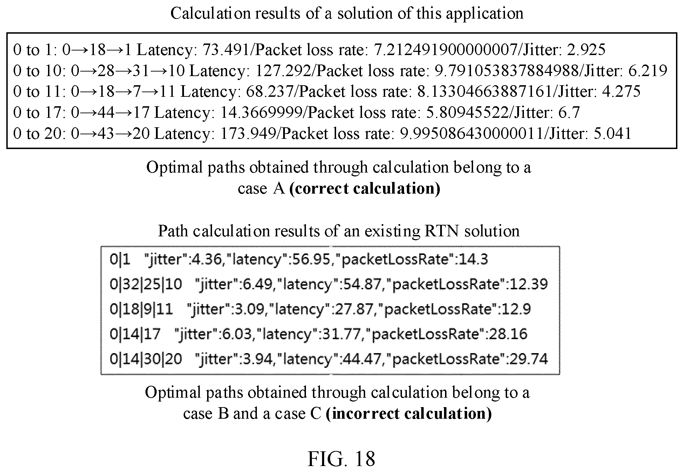

To further describe the problem of inaccurate calculation in this solution, FIG. 18 lists calculation results of the solution of this application and the existing RTN solution. It can be learned from FIG. 18 that, in an RTN with 50 nodes, when a multi-target-factor optimal path to another node is calculated by using a node 0 as a source node, a calculation result in the solution of this application is different from that in the existing RTN solution. It can be learned from calculation results of calculating optimal paths from the node 0 to a node 1, a node 10, a node 11, a node 17, and a node 20 that optimal paths calculated in the solution of this application all belong to the case 1 based on the network performance requirement of the service in this embodiment. However, when optimal paths with the same source and destination nodes are calculated in the existing RTN solution, the calculated paths all belong to the case 2 and the case 3. According to the calculation logic that "the case 1 is prior to the case 2 and the case 2 is prior to the case 3", it is clear that an end-to-end optimal path calculated in the solution of this application is clearly better than a calculation result in the existing RTN solution. A reason why calculation in the existing RTN solution is inaccurate is that a case in which the set of the top 10 paths does not include a path with comprehensive optimal performance occurs. It can be learned that a latency (latency) indicator of a path calculated in the existing RTN solution is better than that in the solution of this application, but overall performance (comprehensively considering a latency, a jitter, and a packet loss rate) is weaker than that in the solution of this application. Therefore, in comparison with the existing solution, calculation accuracy is optimized in the solution of this application. The foregoing descriptions also prove that in the solution of this application, absolute correctness of a calculation result can be ensured in any network status and any network performance requirement of a service.

In addition, it can be found by comparing calculation efficiency of the solution of this application in FIG. 17 and that of the existing consumer cloud RTN solution that, in a large-scale-network (more than 50 nodes) scenario, the calculation efficiency of the solution of this application is improved by hundreds of times compared with that of the existing RTN solution. Therefore, in the solution of this application, not only absolute accuracy of multi-target-factor calculation can be ensured, but also calculation efficiency is greatly improved.

Example 2: A scenario in which both a network performance indicator and a conditional restriction target exist in a plurality of target factors

In the application scenario shown in Example 1, although the network performance requirement of the service includes a plurality of factors, the calculation logic is mainly presented in a dimension of "finding an optimal solution", for example, finding a path with an optimal latency in the case 1, and finding a path with an optimal packet loss rate in the case 3. However, in some application scenarios, not all indicators are required to be optimal. Sometimes, some performance indicators usually only need to be optimized to be within specific thresholds, for example, a latency<300 ms, a bandwidth>500 Mbps, and a hop count does not exceed 4. Herein, such an optimization target for which an optimal solution is not required is referred to as a conditional restriction target.

If a network performance requirement of a service during actual application is more complex than that in Example 1, when both the network performance indicator and the conditional restriction target exist in the plurality of target factors, a calculation error may still occur when a dominant path is screened out only according to the partial order comparison method based on optimization target performance arrays (that is, the performance array includes only network performance indicators).

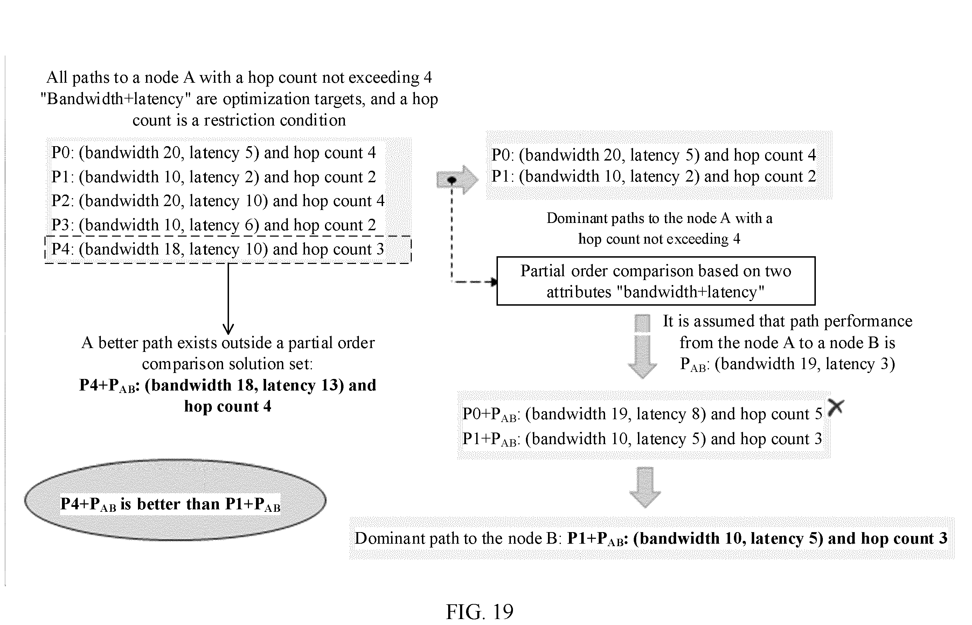

FIG. 19 shows a scenario in which an optimal path calculation error occurs when only partial order screening is performed on the network performance indicator when both the network performance indicator and the conditional restriction target exist in the network performance requirement of the service. In this scenario, optimization targets are a bandwidth and a latency, and a restriction condition is a hop count. A specific service requirement is: A path with a largest bandwidth is preferentially selected from a path with a hop count not exceeding 4; and when a plurality of paths have the same largest bandwidth, a path with a lowest latency is preferentially selected. This is essentially optimal path calculation based on two targets "bandwidth+latency". The hop count is used as a constraint, only needs to be not exceed 4, and does not need to be optimized to an extreme value. It is assumed that an application scenario in this embodiment is still centralized calculation by a control node in an RTN. According to the implementation method in Example 1, dominant path screening and iterative calculation are performed based on two-dimensional performance arrays (bandwidth, latency), and 4 is used as a threshold for the hop count to perform filtering and screening on a reachable path. As shown in FIG. 19, when iterative calculation proceeds to a destination node A, there are a total of five reachable paths to the node A, and the paths are separately: P0: (bandwidth 20, latency 5) and hop count 4; P1: (bandwidth 10, latency 2) and hop count 2; P2: (bandwidth 20, latency 10) and hop count 4; P3: (bandwidth 10, latency 2) and hop count 2; and P4: (bandwidth 18, latency 10) and hop count 3. Because hop counts of all paths do not exceed the threshold 4, all the paths are valid paths. In this case, partial order comparison is performed based on two attributes (bandwidth, latency), to screen out dominant paths P0 and P1 (where two attributes of P0 are better than or equal to those of P2 and P4, and two attributes of P1 are better than or equal to those of P3; and P0 and P1 cannot be compared, where P0 has a better bandwidth, and P1 has a better latency). Iterative calculation continues. It is assumed that there is a directly connected node B after the node A, and performance of a direct path between the node A and the node B is P_{AB}: (bandwidth 19, latency 3). In this case, in a record of the control node, dominant paths to the node A are P0 and P1. Therefore, the control node calculates only two possible paths to the node B through the node A: P0+P_{AB}: (bandwidth 19, latency 8) and hop count 5, and P1+P_{AB}: (bandwidth 10, latency 5) and hop count 3. Because the hop count of the path P0+P_{AB} exceeds a threshold limit and is filtered out, it is finally calculated according to the technical solution in Example 1 that an optimal path to the node B is P1+P_{AB}, and performance of the path is the bandwidth 10 and the latency 5.

However, as shown in FIG. 19, the path P4 is filtered out due to weak performance of two factors "bandwidth+latency" in a process of screening out a dominant path to the node A. If the path P4 can be recorded, when the optimal path to the node B is calculated, a candidate path set additionally includes a candidate path P4+P_{AB}: (bandwidth 18, latency 13) and hop count 4. The hop count of the new path P4+P_{AB} still does not exceed the threshold, but has better performance (a larger bandwidth) compared with the optimal path P1+P_{AB} calculated through partial order screening based on optimization target performance arrays. Therefore, when the requirement of the service is complex, and both the network performance indicator and the conditional restriction target exist, a case of inaccurate calculation may still occur when only partial order comparison is performed on the optimization network performance indicator.

In view of the limitation existing in the solution in Example 1, the solution is improved in Example 2 to still ensure accuracy of multi-target-factor calculation when the requirement of the service includes both the network performance indicator and the conditional restriction target, so that this solution is applicable to network path calculation in any multi-target-factor scenario.

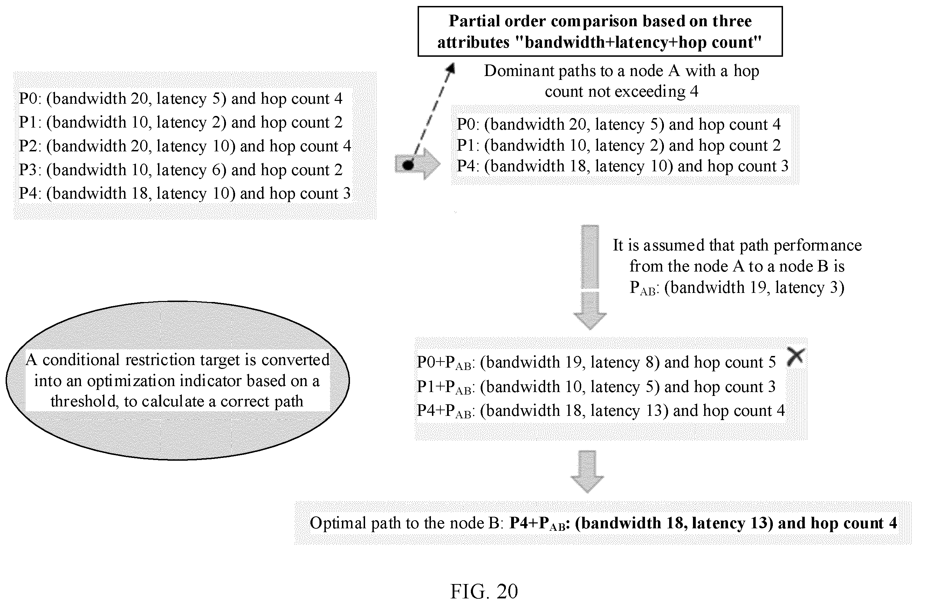

Based on this, in the technical solution of Example 2, on the basis of the implementation procedure of Example 1, the method for calculating a dominant path and an optimal path in step 3 is improved. Specifically, with reference to FIG. 20, an implementation procedure of a new calculation method may be briefly summarized as follows: When both the network performance indicator and the conditional restriction target exist in the requirement of the service, if a conditional restriction target of a current path does not reach a threshold, the conditional restriction target and a network performance indicator jointly form a unified performance array, and partial order comparison and dominant path screening are performed based on unified performance arrays in all paths to a destination node. When a conditional restriction target of a path exceeds the threshold, the path does not participate in subsequent partial order comparison based on unified performance arrays.

Optimization based on two factors "bandwidth+latency" and a hop count not exceeding 4 shown in FIG. 19 is still used as an example. In this example, A specific implementation of the technical solution is adjusted as follows:
When iterative calculation proceeds to a destination node A, there are five reachable paths to the destination node A, and the paths are separately: P0: (bandwidth 20, latency 5) and hop count 4; P1: (bandwidth 10, latency 2) and hop count 2; P2: (bandwidth 20, latency 10) and hop count 4; P3: (bandwidth 10, latency 2) and hop count 2; and P4: (bandwidth 18, latency 10) and hop count 3. Because hop counts of all paths do not exceed the threshold 4, partial order comparison is performed on the five paths based on unified performance arrays of three factors "bandwidth+latency+hop count", and dominant paths finally obtained through screening are P0, P1, and P4 (where when partial order comparison is performed on the arrays of the three factors, which one of P0 and P4 is better cannot be determined through comparison because the bandwidth and the latency of P0 are better than those of P4, but the hop count of P4 is better than that of P0). In this case, the control node uses P0, P1, and P4 as dominant paths to the node A for recording, and the paths participate in subsequent iterative calculation.

Further, when paths to a node B are calculated, based on the previous dominant record, there are three candidate paths: P0+P_{AB} (bandwidth 19, latency 8, hop count 5), P1+P_{AB} (bandwidth 10, latency 5, hop count 3), and P4+P_{AB} (bandwidth 18, latency 13, hop count 4). Because the hop count of the path P0+P_{AB} exceeds a threshold limit and is filtered out, and finally obtained dominant paths to the node B are: P1+P_{AB} and P4+P_{AB}. Then, during optimal path calculation, it can be found that P4+P_{AB} has better performance (a larger bandwidth), and therefore, a finally recorded optimal path to the destination node B is P4+P_{AB}. The solution of this example additionally introduces the conditional restriction target into partial order comparison based on performance arrays, to successfully avoid an error caused by the threshold limit to candidate path screening.

In conclusion, in the solutions in embodiments of this application, for a limitation that the typical IGP distributed algorithm cannot be used to calculate an optimal path under a conditional restriction, a processing method for converting a conditional restriction target into an optimization indicator is designed. Before a parameter corresponding to the conditional restriction target reaches a threshold, the conditional restriction target is uniformly processed according to the optimization indicator, and participates in partial order comparison based on performance arrays with another network performance target, to ensure that an optimal solution is not missed in a dominant path screening process. In this way, in the solutions in embodiments of this application, accuracy of network path calculation in the multi-target-factor scenario can be ensured in any service requirement, in other words, an end-to-end optimal path can be correctly calculated in any complex multi-target-factor scenario.

It should be understood that the foregoing Example 1 and Example 2 are merely two specific scenarios to which the network path calculation method provided in embodiments of this application is applied. Application of the network path calculation method provided in embodiments of this application is not limited to the foregoing scenarios. Details are not described in this application.

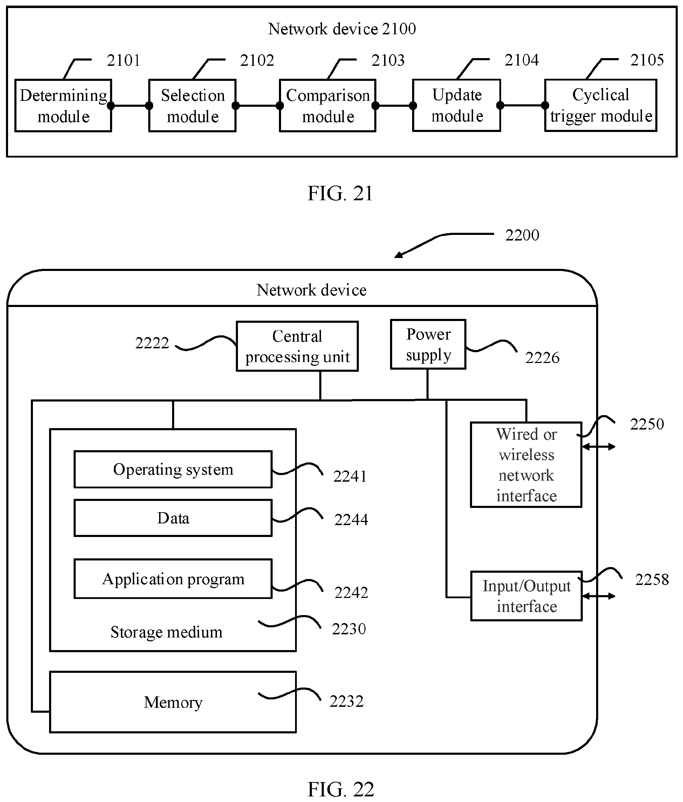

Based on the foregoing embodiments, the following further provides a related device used to implement the solutions, to better implement the solutions in embodiments of this application. Specifically, FIG. 21 is a schematic diagram of a structure of a network device according to an embodiment of this application. The network device 2100 may specifically include: a determining module 2101, configured to determine a first reachable network path that uses a source node as a start point and a directly connected node of the source node as an end point, where the source node is a network node accessed by a target device in a target network; a selection module 2102, configured to select a first node from a to-be-added node set to obtain a second reachable network path that uses the source node as a start point and the first node as a relay, where the to-be-added node set is a set of network nodes other than the source node in the target network; and a comparison module 2103, configured to: if there are m network paths to a same destination node in target paths, compare the m network paths based on n target factors to obtain a first dominant network path, and update the first reachable network path based on the first dominant network path to obtain an updated first reachable network path, where the target paths include the first reachable network path and the second reachable network path, m≥2, and n≥2.

In a possible design, the network device 2100 further includes an update module 2104, configured to: delete the first node from the to-be-added node set, and trigger the selection module 2102, the comparison module 2103, and the update module 2104 to perform repeatedly until the to-be-added node set is an empty set.

In a possible design, the comparison module 2103 is specifically configured to: perform partial order comparison on the m network paths based on the n target factors to obtain a second dominant network path, where each second dominant network path is used as a first dominant network path.

In a possible design, the selection module 2102 is further configured to: when the to-be-added node set becomes an empty set after the first node is deleted, determine, based on a network performance requirement of to-be-transmitted data on the target device and from a last updated first reachable network path, a first target network path that uses the source node as a start point and a destination node corresponding to the to-be-transmitted data as an end point, where the first target network path is used to transmit the to-be-transmitted data.

In a possible design, the comparison module 2103 is specifically further configured to: perform partial order comparison on the m network paths based on the n target factors to obtain a second dominant network path; and when there are at least p second dominant network paths, select q paths from the p second dominant network paths as first dominant network paths, where m≥p≥2, and p≥q≥1.

In a possible design, the selection module 2102 is further configured to: when the to-be-added node set becomes an empty set after the first node is deleted, determine, based on a network performance requirement of to-be-transmitted data on the target device and from a last updated first reachable network path, a second target network path that uses the source node as a start point and a destination node corresponding to the to-be-transmitted data as an end point, where the second target network path is used to transmit the to-be-transmitted data.

In a possible design, the network device 2100 further includes a cyclical trigger module 2105, and the cyclical trigger module 2105 is configured to: trigger the determining module 2101, the selection module 2102, the comparison module 2103, and the update module 2104 to perform repeatedly until a target path obtained in a last round reaches a convergence condition or a preset quantity of rounds is reached.

In a possible design, the cyclical trigger module 2105 may be configured to: determine that a current to-be-added node set is a target node set when there are at least p second dominant network paths; and use the target node set as a new to-be-added node set, and trigger the selection module 2102, the comparison module 2103, and the update module 2104 to perform repeatedly until a first reachable network path obtained in the last round reaches a convergence condition or a preset quantity of rounds is reached.

In a possible design, the selection module 2102 is specifically further configured to: switch a transmission path of the to-be-transmitted data from the second target network path to a third target network path, where the third target network path is one target path that is in target paths obtained in a plurality of rounds and that meets a preset condition, and network performance of the third target network path is better than network performance of the second target network path.

In a possible design, the selection module 2102 is specifically further configured to: obtain a switching instruction, where the switching instruction is used to instruct the source node to wait for preset duration and then initiate transmission of a non-transmitted data packet in the to-be-transmitted data on the third target network path.

In a possible design, the comparison module 2103 is specifically further configured to: construct m performance arrays of the m network paths based on the n target factors, where each performance array includes n elements arranged in order, one network path corresponds to one performance array, and one element corresponds to a specific value of one target factor on a corresponding network path; and when a value of each element in a first performance array is greater than or equal to a value of an element at a corresponding location in a second performance array, determine that a network path corresponding to the first performance array is a second dominant network path, where the first performance array and the second performance array are any two of the m performance arrays.

In a possible design, the comparison module 2103 is specifically further configured to: when a value of a first element in the first performance array is greater than or equal to a value of an element at a corresponding location in the second performance array, and a value of a second element in the first performance array is less than or equal to a value of an element at a corresponding location in the second performance array, determine that both the network path corresponding to the first performance array and a network path corresponding to the second performance array are second dominant network paths, where the first element and the second element are any two elements in the first performance array.

In a possible design, the selection module 2102 is specifically further configured to: select, from the to-be-added node set based on the network performance requirement of the to-be-transmitted data on the target device, the first node that meets a preset performance requirement.

In a possible design, the update module 2104 is specifically configured to: when there are the m network paths to the same destination node, reserve only the first dominant network path, and use a target path including the reserved first dominant network path as the updated first reachable network path.

In a possible design, the target factors include at least one or more of the following: a network performance indicator or a conditional restriction target.

In a possible design, the network performance indicator includes at least one of the following: a bandwidth, a latency, a packet loss rate, a jitter, and costs.

In a possible design, the target network includes at least one of the following: an overlay network or an underlay network.

It should be noted that content such as information exchange and an execution process between the modules/units in the network device 2100 provided in FIG. 21 is based on a same concept as the method embodiment corresponding to FIG. 7 in this application. For specific content, refer to the descriptions in the method embodiment in this application. Details are not described herein again.

An embodiment of this application further provides a network device. FIG. 22 is a schematic diagram of a structure of a network device according to an embodiment of this application. For ease of description, only a part related to this embodiment of this application is shown. For specific technical details that are not disclosed, refer to the method part in embodiments of this application. A module described in the embodiment corresponding to FIG. 21 may be deployed on the network device 2200, and is configured to implement a function of the network device 2100 in the embodiment corresponding to FIG. 21. Specifically, the network device 2200 is implemented by one or more servers. The network device 2200 may be greatly different due to different configurations or performance, and may include one or more central processing units (CPUs) 2222 and memories 2232, and one or more storage media 2230 (for example, one or more mass storage devices) that store an application program 2242 or data 2244. The memory 2232 and the storage medium 2230 may perform temporary storage or permanent storage. The program stored in the storage medium 2230 may include one or more modules (not shown in the figure). Each module may include a series of instruction operations for the network device 2200. Further, the central processing unit 2222 may be configured to communicate with the storage medium 2230, to perform, on the network device 2200, a series of instruction operations in the storage medium 2230.

The network device 2200 may further include one or more power supplies 2226, one or more wired or wireless network interfaces 2250, one or more input/output interfaces 2258, and/or one or more operating systems 2241, for example, Windows ServerTM, Mac OS XTM, UnixTM, LinuxTM, and FreeBSDTM.

In this embodiment of this application, the central processing unit 2222 is configured to perform the network path calculation method in the embodiment corresponding to FIG. 7. For example, the central processing unit 2222 may be configured to: first determine a reachable network path that uses a source node as a start point and a directly connected node of the source node as an end point, where the reachable network path may be referred to as a first reachable network path (where there may be one or more first reachable network paths). It should be noted that the reachable network path not only includes network nodes involved in the reachable network path, but also includes overall network performance (for example, a latency, a bandwidth, and a packet loss rate of the reachable network path) of the entire reachable network path. The source node is a network node accessed by a target device (namely, a device having to-be-sent data) in a network (which may be referred to as a target network). Then, it is determined whether a to-be-added node set is an empty set, where the to-be-added node set is a set of network nodes other than the source node in the target network. If it is determined that the to-be-added node set is not an empty set (in other words, there is a network node in the to-be-added node set), a node (which may be referred to as a first node) is selected from the to-be-added node set to obtain a reachable network path that uses the source node as a start point and the first node as a relay. The reachable network path may be referred to as a second reachable network path. It should be noted that, in some implementations of this application, an intermediate node of the second reachable network path does not include a network node other than the first node in the to-be-added set. In addition, the intermediate node of the second reachable network path does not include a first network node (namely, the source node) and a last destination node (namely, a destination node) of the second reachable network path, but is any "intermediate" network node. For example, it is assumed that the second reachable network path is A→B→C→...→X, where A, B, C, ..., and X are all network nodes. In this case, an intermediate node of the second reachable network path is any network node in B, C, ..., and does not include the source node A and the destination node X. All reachable network paths included in the first reachable network path and the second reachable network path may be referred to as target paths (where there are one or more target paths). If there are m network paths to a same destination node in the target paths, the m network paths are compared based on n target factors to obtain a first dominant network path, and update is performed on the target paths based on the first dominant network path to obtain an updated target path, where m≥2, and n≥2. After the updated target path is obtained, the first node may be deleted from the to-be-added node set, and the updated target path is used as a new first reachable network path. After the updated target path is used as the new first reachable network path, a step of determining whether the to-be-added node set is empty and a subsequent step are repeatedly performed until the to-be-added node set is empty.

It should be noted that the central processing unit 2222 may be further configured to perform any step in the method embodiment corresponding to FIG. 7 in this application. For specific content, refer to the descriptions in the foregoing method embodiment of this application. Details are not described herein again.

An embodiment of this application further provides a computer-readable storage medium. The computer-readable storage medium stores a program for signal processing. When the program is run on a computer, the computer is enabled to perform the steps in the descriptions of the foregoing embodiments.

In addition, it should be noted that the described apparatus embodiments are merely examples. The units described as separate parts may or may not be physically separate, and parts displayed as units may or may not be physical units, that is, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, all functions that can be completed by a computer program can be easily implemented by using corresponding hardware, and a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or a part contributing to the conventional technology may be implemented in a form of a software product. The computer software product is stored in a readable storage medium, for example, a floppy disk, a USB flash drive, a removable hard disk, a read-only memory (ROM), a random access memory (RAM), a magnetic disk, or an optical disc of a computer, and includes several instructions for instructing a computer device (which may be a personal computer, a training device, a network device, or the like) to perform the method described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

## Claims

1. A network path calculation method, comprising:
determining a first reachable network path that uses a source node as a start point and a directly connected node of the source node as an end point, wherein the source node is a network node accessed by a target device in a target network;
selecting a first node from a to-be-added node set to obtain a second reachable network path that uses the source node as a start point and the first node as a relay, wherein the to-be-added node set is a set of network nodes other than the source node in the target network; and
if there are m network paths using a same destination node as end points in a target path, comparing the m network paths based on n target factors to obtain a first dominant network path, and updating the first reachable network path based on the first dominant network path to obtain an updated first reachable network path, wherein the target path comprises the first reachable network path and the second reachable network path, m≥2, and n≥2,
wherein after obtaining the updated first reachable network path, the method further comprises:
deleting the first node from the to-be-added node set, and repeatedly performing a step of selecting a first node from the to-be-added node set and a subsequent step until the to-be-added node set is an empty set,
wherein the comparing the m network paths based on n target factors to obtain a first dominant network path comprises:
performing partial order comparison on the m network paths based on the n target factors to obtain a second dominant network path, wherein each second dominant network path is used as a first dominant network path,
wherein the method further comprises:
when the to-be-added node set becomes an empty set after the first node is deleted, determining, based on a network performance requirement of to-be-transmitted data on the target device and from a last updated first reachable network path, a first target network path that uses the source node as a start point and a destination node corresponding to the to-be-transmitted data as an end point, wherein the first target network path is used to transmit the to-be-transmitted data.

2. A network path calculation method, comprising:
determining a first reachable network path that uses a source node as a start point and a directly connected node of the source node as an end point, wherein the source node is a network node accessed by a target device in a target network;
selecting a first node from a to-be-added node set to obtain a second reachable network path that uses the source node as a start point and the first node as a relay, wherein the to-be-added node set is a set of network nodes other than the source node in the target network; and
if there are m network paths using a same destination node as end points in a target path, comparing the m network paths based on n target factors to obtain a first dominant network path, and updating the first reachable network path based on the first dominant network path to obtain an updated first reachable network path, wherein the target path comprises the first reachable network path and the second reachable network path, m≥2, and n≥2,
wherein after obtaining the updated first reachable network path, the method further comprises:
deleting the first node from the to-be-added node set, and repeatedly performing a step of selecting a first node from the to-be-added node set and a subsequent step until the to-be-added node set is an empty set,
wherein the comparing the m network paths based on n target factors to obtain a first dominant network path comprises:
performing partial order comparison on the m network paths based on the n target factors to obtain a second dominant network path; and
when there are at least p second dominant network paths, selecting q paths from the p second dominant network paths as first dominant network paths, wherein m≥p≥2, and p≥q≥1,
wherein the method further comprises:
when the to-be-added node set becomes an empty set after the first node is deleted, determining, based on a network performance requirement of to-be-transmitted data on the target device and from a last updated first reachable network path, a second target network path that uses the source node as a start point and a destination node corresponding to the to-be-transmitted data as an end point, wherein the second target network path is used to transmit the to-be-transmitted data.

3. The method according to claim 2, wherein the method further comprises:
determining that a current to-be-added node set is a target node set when there are at least p second dominant network paths; and
using the target node set as a new to-be-added node set, and repeatedly performing a step of selecting a first node from the to-be-added node set to obtain a second reachable network path that uses the source node as a start point and the first node as a relay and a subsequent step until a first reachable network path obtained in a last round reaches a convergence condition or a preset quantity of rounds is reached, wherein performing the step of selecting a first node from the to-be-added node set to obtain a second reachable network path that uses the source node as a start point and the first node as a relay and the subsequent step once is one round.

4. The method according to claim 3, wherein the method further comprises:
switching a transmission path of the to-be-transmitted data from the second target network path to a third target network path, wherein the third target network path is one target path that is in target paths obtained in a plurality of rounds and that meets a preset condition, and network performance of the third target network path is better than network performance of the second target network path.

5. The method according to claim 4, wherein the switching a transmission path of the to-be-transmitted data from the second target network path to a third target network path comprises:
obtaining a switching instruction, wherein the switching instruction is used to instruct the source node to wait for preset duration and then initiate transmission of a non-transmitted data packet in the to-be-transmitted data on the third target network path.

6. The method according to any one of claims 1 to 5, wherein the performing partial order comparison on the m network paths based on the n target factors to obtain a second dominant network path comprises:
constructing m performance arrays of the m network paths based on the n target factors, wherein each performance array comprises n elements arranged in order, one network path corresponds to one performance array, and one element corresponds to a value of one target factor on a corresponding network path; and
when a value of each element in a first performance array is greater than or equal to a value of an element at a corresponding location in a second performance array, determining that a network path corresponding to the first performance array is a second dominant network path, wherein the first performance array and the second performance array are two of the m performance arrays.

7. The method according to claim 6, wherein the method further comprises:
when a value of a first element in the first performance array is greater than or equal to a value of an element at a corresponding location in the second performance array, and a value of a second element in the first performance array is less than or equal to a value of an element at a corresponding location in the second performance array, determining that both the network path corresponding to the first performance array and a network path corresponding to the second performance array are second dominant network paths, wherein the first element and the second element are two elements in the first performance array.

8. A network device (2100), comprising:
a determining module (2101), configured to determine a first reachable network path that uses a source node as a start point and a directly connected node of the source node as an end point, wherein the source node is a network node accessed by a target device in a target network;
a selection module (2102), configured to select a first node from a to-be-added node set to obtain a second reachable network path that uses the source node as a start point and the first node as a relay, wherein the to-be-added node set is a set of network nodes other than the source node in the target network; and
a comparison module (2103), configured to: if there are m network paths to a same destination node in a target path, compare the m network paths based on n target factors to obtain a first dominant network path, and update the first reachable network path based on the first dominant network path to obtain an updated first reachable network path, wherein the target path comprises the first reachable network path and the second reachable network path, m≥2, and n≥2,
wherein the network device (2100) further comprises an update module (2104), configured to:
delete the first node from the to-be-added node set, and trigger the selection module (2102), the comparison module (2103), and the update module (2104) to perform repeatedly until the to-be-added node set is an empty set,
wherein the comparison module (2103) is specifically configured to:
perform partial order comparison on the m network paths based on the n target factors to obtain a second dominant network path, wherein each second dominant network path is used as a first dominant network path,
wherein the selection module (2102) is further configured to:
when the to-be-added node set becomes an empty set after the first node is deleted, determine, based on a network performance requirement of to-be-transmitted data on the target device and from a last updated first reachable network path, a first target network path that uses the source node as a start point and a destination node corresponding to the to-be-transmitted data as an end point, wherein the first target network path is used to transmit the to-be-transmitted data.

9. A network device (2100), comprising:
a determining module (2101), configured to determine a first reachable network path that uses a source node as a start point and a directly connected node of the source node as an end point, wherein the source node is a network node accessed by a target device in a target network;
a selection module (2102), configured to select a first node from a to-be-added node set to obtain a second reachable network path that uses the source node as a start point and the first node as a relay, wherein the to-be-added node set is a set of network nodes other than the source node in the target network; and
a comparison module (2103), configured to: if there are m network paths to a same destination node in a target path, compare the m network paths based on n target factors to obtain a first dominant network path, and update the first reachable network path based on the first dominant network path to obtain an updated first reachable network path, wherein the target path comprises the first reachable network path and the second reachable network path, m≥2, and n≥2,
wherein the network device (2100) further comprises an update module (2104), configured to:
delete the first node from the to-be-added node set, and trigger the selection module (2102), the comparison module (2103), and the update module (2104) to perform repeatedly until the to-be-added node set is an empty set,
wherein the comparison module (2103) is specifically further configured to:
perform partial order comparison on the m network paths based on the n target factors to obtain a second dominant network path; and
when there are at least p second dominant network paths, select q paths from the p second dominant network paths as first dominant network paths, wherein m≥p≥2, and p≥q≥1,
wherein the selection module (2102) is further configured to:
when the to-be-added node set becomes an empty set after the first node is deleted, determine, based on a network performance requirement of to-be-transmitted data on the target device and from a last updated first reachable network path, a second target network path that uses the source node as a start point and a destination node corresponding to the to-be-transmitted data as an end point, wherein the second target network path is used to transmit the to-be-transmitted data.

10. A computer-readable storage medium, comprising a program, wherein when the program is run on a computer, the computer is enabled to perform the method according to any one of claims 1 to 7.

11. A computer program product comprising instructions, wherein when the computer program product runs on a computer, the computer is enabled to perform the method according to any one of claims 1 to 7.

## Patentansprüche

1. Netzwerkpfadberechnungsverfahren, umfassend:
Ermitteln eines ersten erreichbaren Netzwerkpfades, der einen Quellknoten als einen Startpunkt und einen direkt mit dem Quellknoten verbundenen Knoten als einen Endpunkt verwendet, wobei der Quellknoten ein Netzwerkknoten ist, auf den ein Zielvorrichtung in einem Zielnetzwerk zugreift;
Auswählen eines ersten Knotens aus einer hinzuzufügenden Knotenmenge, um einen zweiten erreichbaren Netzwerkpfad zu erlangen, der den Quellknoten als einen Startpunkt und den ersten Knoten als ein Relais verwendet, wobei die hinzuzufügende Knotenmenge eine Menge von Netzwerkknoten ist, bei denen es sich nicht um den Quellknoten in dem Zielnetzwerk handelt; und
wenn es m Netzwerkpfade gibt, die einen gleichen Bestimmungsknoten als Endpunkte in einem Zielpfad verwenden, Vergleichen der m Netzwerkpfade basierend auf n Zielfaktoren, um einen ersten dominanten Netzwerkpfad zu erlangen, und Aktualisieren des ersten erreichbaren Netzwerkpfades basierend auf dem ersten dominanten Netzwerkpfad, um einen aktualisierten ersten erreichbaren Netzwerkpfad zu erlangen, wobei der Zielpfad den ersten erreichbaren Netzwerkpfad und den zweiten erreichbaren Netzwerkpfad umfasst, m≥2 und n≥2,
wobei das Verfahren nach dem Erlangen des aktualisierten ersten erreichbaren Netzwerkpfads ferner Folgendes umfasst:
Löschen des ersten Knotens aus der hinzuzufügenden Knotenmenge und wiederholtes Durchführen eines Schrittes des Auswählens eines ersten Knotens aus der hinzuzufügenden Knotenmenge und eines nachfolgenden Schrittes, bis die hinzuzufügende Knotenmenge eine leere Menge ist,
wobei das Vergleichen der m Netzwerkpfade basierend auf n Zielfaktoren, um einen ersten dominanten Netzwerkpfad zu erlangen, Folgendes umfasst:
Durchführen eines Halbordnungsvergleichs der m Netzwerkpfade basierend auf den n Zielfaktoren, um einen zweiten dominanten Netzwerkpfad zu erlangen, wobei jeder zweite dominante Netzwerkpfad als ein erster dominanter Netzwerkpfad verwendet wird,
wobei das Verfahren ferner Folgendes umfasst:
wenn die hinzuzufügende Knotenmenge eine leere Menge wird, nachdem der erste Knoten gelöscht worden ist, Ermitteln, basierend auf einer Netzwerkleistungsanforderung der zu übertragenden Daten auf der Zielvorrichtung und von einem zuletzt aktualisierten ersten erreichbaren Netzwerkpfad, eines ersten Zielnetzwerkpfades, der den Quellknoten als einen Startpunkt und einen den zu übertragenden Daten entsprechenden Bestimmungsknoten als einen Endpunkt verwendet, wobei der erste Zielnetzwerkpfad zur Übertragung der zu übertragenden Daten verwendet wird.

2. Netzwerkpfadberechnungsverfahren, umfassend:
Ermitteln eines ersten erreichbaren Netzwerkpfades, der einen Quellknoten als einen Startpunkt und einen direkt mit dem Quellknoten verbundenen Knoten als einen Endpunkt verwendet, wobei der Quellknoten ein Netzwerkknoten ist, auf den ein Zielvorrichtung in einem Zielnetzwerk zugreift;
Auswählen eines ersten Knotens aus einer hinzuzufügenden Knotenmenge, um einen zweiten erreichbaren Netzwerkpfad zu erlangen, der den Quellknoten als einen Startpunkt und den ersten Knoten als ein Relais verwendet, wobei die hinzuzufügende Knotenmenge eine Menge von Netzwerkknoten ist, bei denen es sich nicht um den Quellknoten in dem Zielnetzwerk handelt; und
wenn es m Netzwerkpfade gibt, die einen gleichen Bestimmungsknoten als Endpunkte in einem Zielpfad verwenden, Vergleichen der m Netzwerkpfade basierend auf n Zielfaktoren, um einen ersten dominanten Netzwerkpfad zu erlangen, und Aktualisieren des ersten erreichbaren Netzwerkpfades basierend auf dem ersten dominanten Netzwerkpfad, um einen aktualisierten ersten erreichbaren Netzwerkpfad zu erlangen, wobei der Zielpfad den ersten erreichbaren Netzwerkpfad und den zweiten erreichbaren Netzwerkpfad umfasst, m≥2 und n≥2,
wobei das Verfahren nach dem Erlangen des aktualisierten ersten erreichbaren Netzwerkpfads ferner Folgendes umfasst:
Löschen des ersten Knotens aus der hinzuzufügenden Knotenmenge und wiederholtes Durchführen eines Schrittes des Auswählens eines ersten Knotens aus der hinzuzufügenden Knotenmenge und eines nachfolgenden Schrittes, bis die hinzuzufügende Knotenmenge eine leere Menge ist,
wobei das Vergleichen der m Netzwerkpfade basierend auf n Zielfaktoren, um einen ersten dominanten Netzwerkpfad zu erlangen, Folgendes umfasst:
Durchführung eines Halbordnungsvergleichs auf den m Netzwerkpfaden basierend auf den n Zielfaktoren, um einen zweiten dominanten Netzwerkpfad zu erlangen; und
wenn es mindestens p zweite dominante Netzwerkpfade gibt, Auswählen von q Pfaden aus den p zweiten dominanten Netzwerkpfaden als erste dominante Netzwerkpfade, wobei m≥p≥2 und p≥q≥1,
wobei das Verfahren ferner Folgendes umfasst:
wenn die hinzuzufügende Knotenmenge eine leere Menge wird, nachdem der erste Knoten gelöscht worden ist, Ermitteln, basierend auf einer Netzwerkleistungsanforderung der zu übertragenden Daten auf der Zielvorrichtung und von einem zuletzt aktualisierten ersten erreichbaren Netzwerkpfad, eines zweiten Zielnetzwerkpfades, der den Quellknoten als einen Startpunkt und einen den zu übertragenden Daten entsprechenden Bestimmungsknoten als einen Endpunkt verwendet, wobei der zweite Zielnetzwerkpfad zur Übertragung der zu übertragenden Daten verwendet wird.

3. Verfahren nach Anspruch 2, wobei das Verfahren ferner Folgendes umfasst:
Ermitteln, dass eine aktuell hinzuzufügende Knotenmenge eine Zielknotenmenge ist, wenn es mindestens p zweite dominante Netzwerkpfade gibt; und
Verwenden der Zielknotenmenge als eine neue hinzuzufügende Knotenmenge und wiederholtes Durchführen eines Schrittes des Auswählens eines ersten Knotens aus der hinzuzufügenden Knotenmenge, um einen zweiten erreichbaren Netzwerkpfad zu erlangen, der den Quellknoten als einen Startpunkt und den ersten Knoten als ein Relais verwendet, und eines nachfolgenden Schrittes, bis ein erster erreichbarer Netzwerkpfad, der in einer letzten Runde erlangt wurde, eine Konvergenzbedingung erreicht oder eine voreingestellte Anzahl von Runden erreicht ist, wobei das Durchführen des Schrittes des Auswählens eines ersten Knotens aus der hinzuzufügenden Knotenmenge, um einen zweiten erreichbaren Netzwerkpfad zu erlangen, der den Quellknoten als einen Startpunkt und den ersten Knoten als ein Relais verwendet, und des nachfolgenden Schrittes einmal eine Runde ist.

4. Verfahren nach Anspruch 3, wobei das Verfahren ferner Folgendes umfasst:
Umschalten eines Übertragungspfades der zu übertragenden Daten von dem zweiten Zielnetzwerkpfad auf einen dritten Zielnetzwerkpfad, wobei der dritte Zielnetzwerkpfad ein Zielpfad ist, der sich in Zielpfaden befindet, die in einer Vielzahl von Runden erlangt wurden, und der eine voreingestellte Bedingung erfüllt, und eine Netzwerkleistung des dritten Zielnetzwerkpfades besser ist als die Netzwerkleistung des zweiten Zielnetzwerkpfades.

5. Verfahren nach Anspruch 4, wobei das Umschalten eines Übertragungspfades der zu übertragenden Daten von dem zweiten Zielnetzwerkpfad auf einen dritten Zielnetzwerkpfad Folgendes umfasst:
Erlangen einer Umschaltanweisung, wobei die Umschaltanweisung dazu verwendet wird, den Quellknoten anzuweisen, eine voreingestellte Dauer zu warten und dann eine Übertragung eines nicht übertragenen Datenpaketes in den zu übertragenden Daten auf dem dritten Zielnetzwerkpfad einzuleiten.

6. Verfahren nach einem der Ansprüche 1 bis 5, wobei das Durchführen eines Halbordnungsvergleichs auf den m Netzwerkpfaden basierend auf den n Zielfaktoren, um einen zweiten dominanten Netzwerkpfad zu erlangen, Folgendes umfasst:
Konstruieren von m Leistungsarrays der m Netzwerkpfade basierend auf den n Zielfaktoren, wobei jedes Leistungsarray n Elemente, die in der richtigen Reihenfolge angeordnet sind, umfasst, ein Netzwerkpfad einem Leistungsarray entspricht und ein Element einem Wert eines Zielfaktors auf einem entsprechenden Netzwerkpfad entspricht; und
wenn ein Wert eines Elements in einem ersten Leistungsarray größer als der Wert eines Elements an einer entsprechenden Stelle in einem zweiten Leistungsarray oder gleich diesem ist, Ermitteln, dass ein dem ersten Leistungsarray entsprechender Netzwerkpfad ein zweiter dominanter Netzwerkpfad ist, wobei das erste Leistungsarray und das zweite Leistungsarray zwei der m Leistungsarrays sind.

7. Verfahren nach Anspruch 6, wobei das Verfahren ferner Folgendes umfasst:
wenn ein Wert eines ersten Elements in dem ersten Leistungsarray größer als ein Wert eines Elements an einer entsprechenden Position in dem zweiten Leistungsarray oder gleich diesem ist und ein Wert eines zweiten Elements in dem ersten Leistungsarray kleiner als ein Wert eines Elements an einer entsprechenden Position in dem zweiten Leistungsarray oder gleich diesem ist, Ermitteln, dass es sich bei sowohl bei dem dem ersten Leistungsarray entsprechenden Netzwerkpfad als auch einem dem zweiten Leistungsarray entsprechenden Netzwerkpfad um zweite dominante Netzwerkpfade handelt, wobei das erste Element und das zweite Element zwei Elemente in dem ersten Leistungsarray sind.

8. Netzwerkvorrichtung (2100), umfassend:
ein Ermittlungsmodul (2101), das dazu konfiguriert ist, einen ersten erreichbaren Netzwerkpfad, der einen Quellknoten als einen Startpunkt und einen direkt mit dem Quellknoten verbundenen Knoten als einen Endpunkt verwendet, zu erlangen, wobei der Quellknoten ein Netzwerkknoten ist, auf den ein Zielvorrichtung in einem Zielnetzwerk zugreift;
ein Auswahlmodul (2102), das dazu konfiguriert ist, einen ersten Knoten aus einer hinzuzufügenden Knotenmenge auszuwählen, um einen zweiten erreichbaren Netzwerkpfad zu erlangen, der den Quellknoten als einen Startpunkt und den ersten Knoten als ein Relais verwendet, wobei die hinzuzufügende Knotenmenge eine Menge von Netzwerkknoten ist, bei denen es sich nicht um den Quellknoten in dem Zielnetzwerk handelt; und
ein Vergleichsmodul (2103), das zu Folgendem konfiguriert ist: wenn es m Netzwerkpfade zu einem gleichen Bestimmungsknoten in einem Zielpfad gibt, Vergleichen der m Netzwerkpfade basierend auf n Zielfaktoren, um einen ersten dominanten Netzwerkpfad zu erlangen, und Aktualisieren des ersten erreichbaren Netzwerkpfades basierend auf dem ersten dominanten Netzwerkpfad, um einen aktualisierten ersten erreichbaren Netzwerkpfad zu erlangen, wobei der Zielpfad den ersten erreichbaren Netzwerkpfad und den zweiten erreichbaren Netzwerkpfad umfasst, m≥2 und n≥2,
wobei die Netzwerkvorrichtung (2100) ferner ein Aktualisierungsmodul (2104) umfasst, das zu Folgendem konfiguriert ist:
Löschen des ersten Knotens aus der hinzuzufügenden Knotenmenge und Auslösen des Auswahlmoduls (2102), des Vergleichsmoduls (2103) und des Aktualisierungsmoduls (2104), sodass sie wiederholt durchgeführt werden, bis die hinzuzufügende Knotenmenge eine leere Menge ist,
wobei das Vergleichsmodul (2103) insbesondere zu Folgendem konfiguriert ist:
Durchführen eines Halbordnungsvergleichs der m Netzwerkpfade basierend auf den n Zielfaktoren, um einen zweiten dominanten Netzwerkpfad zu erlangen, wobei jeder zweite dominante Netzwerkpfad als ein erster dominanter Netzwerkpfad verwendet wird,
wobei das Auswahlmodul (2102) ferner zu Folgendem konfiguriert ist:
wenn die hinzuzufügende Knotenmenge eine leere Menge wird, nachdem der erste Knoten gelöscht worden ist, Ermitteln, basierend auf einer Netzwerkleistungsanforderung der zu übertragenden Daten auf der Zielvorrichtung und von einem zuletzt aktualisierten ersten erreichbaren Netzwerkpfad, eines ersten Zielnetzwerkpfades, der den Quellknoten als einen Startpunkt und einen den zu übertragenden Daten entsprechenden Bestimmungsknoten als einen Endpunkt verwendet, wobei der erste Zielnetzwerkpfad zur Übertragung der zu übertragenden Daten verwendet wird.

9. Netzwerkvorrichtung (2100), umfassend:
ein Ermittlungsmodul (2101), das dazu konfiguriert ist, einen ersten erreichbaren Netzwerkpfad, der einen Quellknoten als einen Startpunkt und einen direkt mit dem Quellknoten verbundenen Knoten als einen Endpunkt verwendet, zu erlangen, wobei der Quellknoten ein Netzwerkknoten ist, auf den ein Zielvorrichtung in einem Zielnetzwerk zugreift;
ein Auswahlmodul (2102), das dazu konfiguriert ist, einen ersten Knoten aus einer hinzuzufügenden Knotenmenge auszuwählen, um einen zweiten erreichbaren Netzwerkpfad zu erlangen, der den Quellknoten als einen Startpunkt und den ersten Knoten als ein Relais verwendet, wobei die hinzuzufügende Knotenmenge eine Menge von Netzwerkknoten ist, bei denen es sich nicht um den Quellknoten in dem Zielnetzwerk handelt; und
ein Vergleichsmodul (2103), das zu Folgendem konfiguriert ist:
wenn es m Netzwerkpfade zu einem gleichen Bestimmungsknoten in einem Zielpfad gibt, Vergleichen der m Netzwerkpfade basierend auf n Zielfaktoren, um einen ersten dominanten Netzwerkpfad zu erlangen, und Aktualisieren des ersten erreichbaren Netzwerkpfades basierend auf dem ersten dominanten Netzwerkpfad, um einen aktualisierten ersten erreichbaren Netzwerkpfad zu erlangen, wobei der Zielpfad den ersten erreichbaren Netzwerkpfad und den zweiten erreichbaren Netzwerkpfad umfasst, m≥2 und n≥2,
wobei die Netzwerkvorrichtung (2100) ferner ein Aktualisierungsmodul (2104) umfasst, das zu Folgendem konfiguriert ist:
Löschen des ersten Knotens aus der hinzuzufügenden Knotenmenge und Auslösen des Auswahlmoduls (2102), des Vergleichsmoduls (2103) und des Aktualisierungsmoduls (2104), sodass sie wiederholt durchgeführt werden, bis die hinzuzufügende Knotenmenge eine leere Menge ist,
wobei das Vergleichsmodul (2103) ferner insbesondere zu Folgendem konfiguriert ist:
Durchführen eines Halbordnungsvergleichs auf den m Netzwerkpfaden basierend auf den n Zielfaktoren, um einen zweiten dominanten Netzwerkpfad zu erlangen; und
wenn es mindestens p zweite dominante Netzwerkpfade gibt, Auswählen von q Pfaden aus den p zweiten dominanten Netzwerkpfaden als erste dominante Netzwerkpfade, wobei m≥p≥2 und p≥q≥1,
wobei das Auswahlmodul (2102) ferner zu Folgendem konfiguriert ist:
wenn die hinzuzufügende Knotenmenge eine leere Menge wird, nachdem der erste Knoten gelöscht worden ist, Ermitteln, basierend auf einer Netzwerkleistungsanforderung der zu übertragenden Daten auf der Zielvorrichtung und von einem zuletzt aktualisierten ersten erreichbaren Netzwerkpfad, eines zweiten Zielnetzwerkpfades, der den Quellknoten als einen Startpunkt und einen den zu übertragenden Daten entsprechenden Bestimmungsknoten als einen Endpunkt verwendet, wobei der zweite Zielnetzwerkpfad zur Übertragung der zu übertragenden Daten verwendet wird.

10. Computerlesbares Speichermedium, umfassend ein Programm, wobei, wenn das Programm auf einem Computer läuft, der Computer in die Lage versetzt wird, das Verfahren nach einem der Ansprüche 1 bis 7 durchzuführen.

11. Computerprogrammprodukt, umfassend Anweisungen, wobei, wenn das Computerprogrammprodukt auf einem Computer läuft, der Computer in die Lage versetzt wird, das Verfahren nach einem der Ansprüche 1 bis 7 durchzuführen.

## Revendications

1. Procédé de calcul de chemin de réseau, comprenant :
la détermination d'un premier chemin de réseau accessible qui utilise un nœud source comme point de départ et un nœud directement connecté du nœud source comme point d'arrivée, dans lequel le nœud source est un nœud de réseau auquel accède un dispositif cible dans un réseau cible ;
la sélection d'un premier nœud à partir d'un ensemble de nœuds à ajouter pour obtenir un second chemin de réseau accessible qui utilise le nœud source comme point de départ et le premier nœud comme relais, dans lequel l'ensemble de nœuds à ajouter est un ensemble de nœuds de réseau autres que le nœud source dans le réseau cible ; et
s'il existe m chemins de réseau utilisant un même nœud de destination comme points d'arrivée dans un chemin cible, la comparaison des m chemins de réseau sur la base de n facteurs cibles pour obtenir un premier chemin de réseau dominant, et la mise à jour du premier chemin de réseau accessible sur la base du premier chemin de réseau dominant pour obtenir un premier chemin de réseau accessible mis à jour, dans lequel le chemin cible comprend le premier chemin de réseau accessible et le second chemin de réseau accessible, m ≥ 2 et n ≥ 2,
dans lequel, après l'obtention du premier chemin de réseau accessible mis à jour, le procédé comprend en outre :
la suppression du premier nœud de l'ensemble de nœuds à ajouter, et l'exécution de manière répétée d'une étape de sélection d'un premier nœud à partir de l'ensemble de nœuds à ajouter et d'une étape ultérieure jusqu'à ce que l'ensemble de nœuds à ajouter soit un ensemble vide,
dans lequel la comparaison des m chemins de réseau sur la base de n facteurs cibles pour obtenir un premier chemin de réseau dominant comprend :
l'exécution d'une comparaison d'ordre partiel sur les m chemins de réseau sur la base des n facteurs cibles pour obtenir un second chemin de réseau dominant, dans lequel chaque second chemin de réseau dominant est utilisé comme premier chemin de réseau dominant,
dans lequel le procédé comprend en outre :
lorsque l'ensemble de nœuds à ajouter devient un ensemble vide après la suppression du premier nœud, la détermination, sur la base d'une exigence de performance réseau de données à transmettre sur le dispositif cible et à partir d'un premier chemin de réseau accessible mis à jour en dernier, d'un premier chemin de réseau cible qui utilise le nœud source comme point de départ et un nœud de destination correspondant aux données à transmettre comme point d'arrivée, dans lequel le premier chemin de réseau cible est utilisé pour transmettre les données à transmettre.

2. Procédé de calcul de chemin de réseau, comprenant :
la détermination d'un premier chemin de réseau accessible qui utilise un nœud source comme point de départ et un nœud directement connecté du nœud source comme point d'arrivée, dans lequel le nœud source est un nœud de réseau auquel accède un dispositif cible dans un réseau cible ;
la sélection d'un premier nœud à partir d'un ensemble de nœuds à ajouter pour obtenir un second chemin de réseau accessible qui utilise le nœud source comme point de départ et le premier nœud comme relais, dans lequel l'ensemble de nœuds à ajouter est un ensemble de nœuds de réseau autres que le nœud source dans le réseau cible ; et
s'il existe m chemins de réseau utilisant un même nœud de destination comme points d'arrivée dans un chemin cible, la comparaison des m chemins de réseau sur la base de n facteurs cibles pour obtenir un premier chemin de réseau dominant, et la mise à jour du premier chemin de réseau accessible sur la base du premier chemin de réseau dominant pour obtenir un premier chemin de réseau accessible mis à jour, dans lequel le chemin cible comprend le premier chemin de réseau accessible et le second chemin de réseau accessible, m ≥ 2 et n ≥ 2,
dans lequel, après l'obtention du premier chemin de réseau accessible mis à jour, le procédé comprend en outre :
la suppression du premier nœud de l'ensemble de nœuds à ajouter, et l'exécution de manière répétée d'une étape de sélection d'un premier nœud à partir de l'ensemble de nœuds à ajouter et d'une étape ultérieure jusqu'à ce que l'ensemble de nœuds à ajouter soit un ensemble vide,
dans lequel la comparaison des m chemins de réseau sur la base de n facteurs cibles pour obtenir un premier chemin de réseau dominant comprend :
l'exécution d'une comparaison d'ordre partiel sur les m chemins de réseau sur la base des n facteurs cibles pour obtenir un second chemin de réseau dominant ; et
lorsqu'il existe au moins p seconds chemins de réseau dominant, la sélection de q chemins à partir des p seconds chemins de réseau dominant comme premiers chemins de réseau dominant, dans lequel m ≥ p ≥ 2 et p ≥ q ≥ 1,
dans lequel le procédé comprend en outre :
lorsque l'ensemble de nœuds à ajouter devient un ensemble vide après la suppression du premier nœud, la détermination, sur la base d'une exigence de performance réseau de données à transmettre sur le dispositif cible et à partir d'un premier chemin de réseau accessible mis à jour en dernier, d'un deuxième chemin de réseau cible qui utilise le nœud source comme point de départ et un nœud de destination correspondant aux données à transmettre comme point d'arrivée, dans lequel le deuxième chemin de réseau cible est utilisé pour transmettre les données à transmettre.

3. Procédé selon la revendication 2, dans lequel le procédé comprend en outre :
la détermination selon laquelle un ensemble de nœuds à ajouter actuel est un ensemble de nœuds cible lorsqu'il existe au moins p seconds chemins de réseau dominant ; et
l'utilisation de l'ensemble de nœuds cible comme nouvel ensemble de nœuds à ajouter, et l'exécution de manière répétée d'une étape de sélection d'un premier nœud à partir de l'ensemble de nœuds à ajouter pour obtenir un second chemin de réseau accessible qui utilise le nœud source comme point de départ et le premier nœud comme relais et d'une étape ultérieure jusqu'à ce qu'un premier chemin de réseau accessible obtenu lors d'un dernier tour atteigne une condition de convergence ou qu'un nombre prédéfini de tours soit atteint, dans lequel l'exécution de l'étape de sélection d'un premier nœud à partir de l'ensemble de nœuds à ajouter pour obtenir un second chemin de réseau accessible qui utilise le nœud source comme point de départ et le premier nœud comme relais et de l'étape ultérieure une seule fois représente un tour.

4. Procédé selon la revendication 3, dans lequel le procédé comprend en outre :
la commutation d'un chemin de transmission des données à transmettre du deuxième chemin de réseau cible vers un troisième chemin de réseau cible, dans lequel le troisième chemin de réseau cible est un chemin cible qui se trouve dans des chemins cibles obtenus lors d'une pluralité de tours et qui satisfait à une condition prédéfinie, et la performance réseau du troisième chemin de réseau cible est meilleure que la performance réseau du deuxième chemin de réseau cible.

5. Procédé selon la revendication 4, dans lequel la commutation d'un chemin de transmission des données à transmettre du deuxième chemin de réseau cible vers un troisième chemin de réseau cible comprend :
l'obtention d'une instruction de commutation, dans lequel l'instruction de commutation est utilisée pour ordonner au nœud source d'attendre pendant une durée prédéfinie, puis d'initier la transmission d'un paquet de données non transmis dans les données à transmettre sur le troisième chemin de réseau cible.

6. Procédé selon l'une quelconque des revendications 1 à 5, dans lequel l'exécution d'une comparaison d'ordre partielle sur les m chemins de réseau sur la base des n facteurs cibles pour obtenir un second chemin de réseau dominant comprend :
la construction de m tableaux de performance des m chemins de réseau sur la base des n facteurs cibles, dans lequel chaque tableau de performance comprend n éléments agencés dans l'ordre, un chemin de réseau correspond à un tableau de performance, et un élément correspond à une valeur d'un facteur cible sur un chemin de réseau correspondant ; et
lorsqu'une valeur de chaque élément dans un premier tableau de performance est supérieure ou égale à une valeur d'un élément à un emplacement correspondant dans un second tableau de performance, la détermination selon laquelle un chemin de réseau correspondant au premier tableau de performance est un second chemin de réseau dominant, dans lequel le premier tableau de performance et le second tableau de performance sont deux des m tableaux de performance.

7. Procédé selon la revendication 6, dans lequel le procédé comprend en outre :
lorsqu'une valeur d'un premier élément dans le premier tableau de performance est supérieure ou égale à une valeur d'un élément à un emplacement correspondant dans le second tableau de performance, et qu'une valeur d'un second élément dans le premier tableau de performance est inférieure ou égale à une valeur d'un élément à un emplacement correspondant dans le second tableau de performance, la détermination selon laquelle le chemin de réseau correspondant au premier tableau de performance et un chemin de réseau correspondant au second tableau de performance sont tous deux des seconds chemins de réseau dominant, dans lequel le premier élément et le second élément sont deux éléments dans le premier tableau de performance.

8. Dispositif de réseau (2100), comprenant :
un module de détermination (2101), configuré pour déterminer un premier chemin de réseau accessible qui utilise un nœud source comme point de départ et un nœud directement connecté du nœud source comme point d'arrivée, dans lequel le nœud source est un nœud de réseau auquel accède un dispositif cible dans un réseau cible ;
un module de sélection (2102), configuré pour sélectionner un premier nœud à partir d'un ensemble de nœuds à ajouter pour obtenir un second chemin de réseau accessible qui utilise le nœud source comme point de départ et le premier nœud comme relais, dans lequel l'ensemble de nœuds à ajouter est un ensemble de nœuds de réseau autres que le nœud source dans le réseau cible ; et
un module de comparaison (2103), configuré pour : s'il existe m chemins de réseau sur un même nœud de destination dans un chemin cible, comparer les m chemins de réseau sur la base de n facteurs cibles pour obtenir un premier chemin de réseau dominant, et mettre à jour le premier chemin de réseau accessible sur la base du premier chemin de réseau dominant pour obtenir un premier chemin de réseau accessible mis à jour, dans lequel le chemin cible comprend le premier chemin de réseau accessible et le second chemin de réseau accessible, m ≥ 2 et n ≥ 2,
dans lequel le dispositif de réseau (2100) comprend en outre un module de mise à jour (2104), configuré pour :
supprimer le premier nœud de l'ensemble de nœuds à ajouter et déclencher le module de sélection (2102), le module de comparaison (2103) et le module de mise à jour (2104) pour qu'ils s'exécutent de manière répétée jusqu'à ce que l'ensemble de nœuds à ajouter soit un ensemble vide,
dans lequel le module de comparaison (2103) est spécifiquement configuré pour :
exécuter une comparaison d'ordre partiel sur les m chemins de réseau sur la base des n facteurs cibles pour obtenir un second chemin de réseau dominant, dans lequel chaque second chemin de réseau dominant est utilisé comme premier chemin de réseau dominant,
dans lequel le module de sélection (2102) est en outre configuré pour :
lorsque l'ensemble de nœuds à ajouter devient un ensemble vide après la suppression du premier nœud, déterminer, sur la base d'une exigence de performance réseau de données à transmettre sur le dispositif cible et à partir d'un premier chemin de réseau accessible mis à jour en dernier, un premier chemin de réseau cible qui utilise le nœud source comme point de départ et un nœud de destination correspondant aux données à transmettre comme point d'arrivée, dans lequel le premier chemin de réseau cible est utilisé pour transmettre les données à transmettre.

9. Dispositif de réseau (2100), comprenant :
un module de détermination (2101), configuré pour déterminer un premier chemin de réseau accessible qui utilise un nœud source comme point de départ et un nœud directement connecté du nœud source comme point d'arrivée, dans lequel le nœud source est un nœud de réseau auquel accède un dispositif cible dans un réseau cible ;
un module de sélection (2102), configuré pour sélectionner un premier nœud à partir d'un ensemble de nœuds à ajouter pour obtenir un second chemin de réseau accessible qui utilise le nœud source comme point de départ et le premier nœud comme relais, dans lequel l'ensemble de nœuds à ajouter est un ensemble de nœuds de réseau autres que le nœud source dans le réseau cible ; et
un module de comparaison (2103), configuré pour : s'il existe m chemins de réseau sur un même nœud de destination dans un chemin cible, comparer les m chemins de réseau sur la base de n facteurs cibles pour obtenir un premier chemin de réseau dominant, et mettre à jour le premier chemin de réseau accessible sur la base du premier chemin de réseau dominant pour obtenir un premier chemin de réseau accessible mis à jour, dans lequel le chemin cible comprend le premier chemin de réseau accessible et le second chemin de réseau accessible, m ≥ 2 et n ≥ 2,
dans lequel le dispositif de réseau (2100) comprend en outre un module de mise à jour (2104), configuré pour :
supprimer le premier nœud de l'ensemble de nœuds à ajouter et déclencher le module de sélection (2102), le module de comparaison (2103) et le module de mise à jour (2104) pour qu'ils s'exécutent de manière répétée jusqu'à ce que l'ensemble de nœuds à ajouter soit un ensemble vide,
dans lequel le module de comparaison (2103) est en outre spécifiquement configuré pour :
exécuter une comparaison d'ordre partiel sur les m chemins de réseau sur la base des n facteurs cibles pour obtenir un second chemin de réseau dominant ; et
lorsqu'il existe au moins p seconds chemins de réseau dominant, sélectionner q chemins à partir des p seconds chemins de réseau dominant comme premiers chemins de réseau dominant, dans lequel m ≥ p ≥ 2 et p ≥ q ≥ 1,
dans lequel le module de sélection (2102) est en outre configuré pour :
lorsque l'ensemble de nœuds à ajouter devient un ensemble vide après la suppression du premier nœud, déterminer, sur la base d'une exigence de performance réseau de données à transmettre sur le dispositif cible et à partir d'un premier chemin de réseau accessible mis à jour en dernier, un deuxième chemin de réseau cible qui utilise le nœud source comme point de départ et un nœud de destination correspondant aux données à transmettre comme point d'arrivée, dans lequel le deuxième chemin de réseau cible est utilisé pour transmettre les données à transmettre.

10. Support de stockage lisible par ordinateur, comprenant un programme, dans lequel lorsque le programme fonctionne sur un ordinateur, l'ordinateur est activé pour exécuter le procédé selon l'une quelconque des revendications 1 à 7.

11. Produit de programme informatique comprenant des instructions, dans lequel lorsque le produit de programme informatique fonctionne sur un ordinateur, l'ordinateur est activé pour exécuter le procédé selon l'une quelconque des revendications 1 à 7.
